# EUROPEAN PATENT APPLICATION

(11) **EP 2 519 011 A1**
(43) Date of publication of application: **31.10.2012**
(21) Application number: 11792375.5
(22) Date of filing: 03.06.2011
(51) Int. Cl.: H04N 13/00, H04N 7/025, H04N 7/03, H04N 7/035

(54) **STEREOSCOPIC IMAGE DATA TRANSMISSION DEVICE, STEREOSCOPIC IMAGE DATA TRANSMISSION METHOD, STEREOSCOPIC IMAGE DATA RECEPTION DEVICE AND STEREOSCOPIC IMAGE DATA RECEPTION METHOD**

(30) Priority: 10.06.2010 JP 2010133329
(71) Applicant: Sony Corporation, Tokyo 108-0075 (JP)
(72) Inventor: TSUKAGOSHI, Ikuo, Tokyo 108-0075 (JP)
(74) Representative: Ealey, Douglas Ralph
(86) International application number: PCT/JP2011/062851
(87) International publication number: WO 2011/155418

(57) **Abstract**

Processing at a reception side is facilitated. A subtitle processing unit (133) converts subtitle data of a two-dimensional image generated by a subtitle generating unit (132) into subtitle data for a stereoscopic image corresponding to a transmission format of stereoscopic image data supplied from a data fetching unit (130) to a video encoder (113). The subtitle data for the stereoscopic image includes data of a left-eye subtitle and data of a right-eye subtitle. The subtitle data for the stereoscopic image is generated to bright disparity to occur between the left-eye subtitle and the right-eye subtitle. A reception side can easily generate display data of the left-eye subtitle to overlap the left-eye image data included in the stereoscopic image data and display data of the right-eye subtitle to overlap the right-eye image data included in the stereoscopic image data based on the subtitle data for the stereoscopic image, and thus processing can be facilitated.

## Description

### TECHNICAL FIELD

The present invention relates to a stereoscopic image data transmission device, a stereoscopic image data transmission method, a stereoscopic image data reception device, and a stereoscopic image data reception method, and more particularly to a stereoscopic image data transmission device that transmits data of overlapping information such as a subtitle together with stereoscopic image data.

### BACKGROUND ART

For example, in Patent Document 1, a transmission system of stereoscopic image data using a television broadcast wave has been proposed. In this transmission system, stereoscopic image data including left-eye image data and right-eye image data is transmitted, and a stereoscopic image display using binocular parallax is performed.

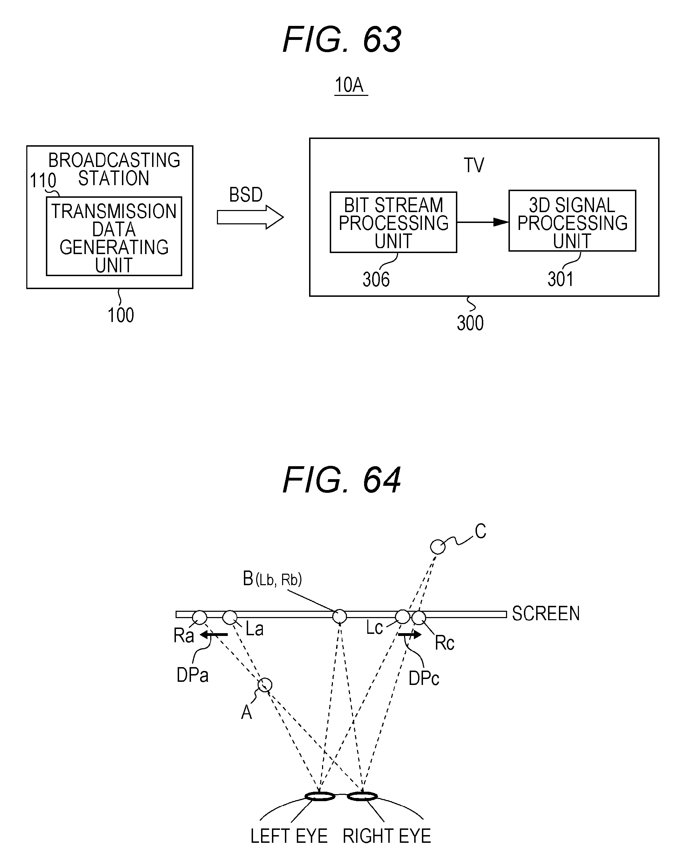

Fig. 64 illustrates a relation between a horizontal display position of an object (body) on a screen and a reproduction position of a stereoscopic image thereof in a stereoscopic image display using binocular parallax. For example, for an object A of which a left image La is displayed to be shifted to the right side and a right image Ra is displayed to be shifted to the left side as illustrated on the screen in the figure, the left and right lines of sights intersect with each other on a further front side than the screen face, and so the reproduction position of the stereoscopic image is located on a further front side than the screen face. DPa represents a disparity vector in a horizontal direction related to the object A.

In addition, for example, for an object B of which a left image Lb and a right image Rb are displayed at the same position as illustrated on the screen in the figure, the left and right lines of sights intersect with each other on the screen face, and so the reproduction position of the stereoscopic image is on the screen face. Furthermore, for example, for an object C of which the left image Lc is displayed to be shifted to the left side and the right image Rc is displayed to be shifted to the right side as illustrated on the screen in the figure, the left and right lines of sights intersect with each other on a further inner side than the screen face, and so the reproduction position of the stereoscopic image is located on a further inner side than the screen face. DPc represents a disparity vector in a horizontal direction related to the object C.

In the past, a side-by-side format and a top-and-bottom format have been known as a transmission format of stereoscopic image data. For example, when a reception side is a set-top box, received stereoscopic image data may be transmitted to a monitor device such as a television receiver via a digital interface such as a high-definition multimedia interface (HDMI) without converting a transmission format. For example, the details of the HDMI standard are described in Non-Patent Document 1.

Further, in the past, it has been known to transmit data of overlapping information such as a subtitle from a transmission side together with two-dimensional (2D) image data. In this case, a reception side processes the data of the overlapping information, and generates display data for displaying the overlapping information. The reception side obtains a 2D image in which the overlapping information is displayed in an overlapping manner by causing the display data to overlap the 2D image data.

### CITATION LIST

### PATENT DOCUMENT

Patent Document 1: Japanese Patent Application Laid-Open No. 2005-6114

### NON-PATENT DOCUMENT

Non-Patent Document 1: High-Definition Multimedia Interface Specification Version 1.4, June 5, 2009

### SUMMARY OF THE INVENTION

### PROBLEMS TO BE SOLVED BY THE INVENTION

As described above, even when stereoscopic image data is transmitted, data of overlapping information such as a subtitle may be transmitted. When data of overlapping information is for 2D image, for example, the above-described set-top box is required to perform processing of generating display data, which is to overlap stereoscopic image data, according a transmission format of stereoscopic image data based on data of overlapping information for a 2D image. For this reason, the set-top box that receives stereoscopic image data needs an advanced processing function and so is high in price.

It is an object of the invention to facilitate processing of a reception side when data of overlapping information such as a subtitle is transmitted together with stereoscopic image data.

### SOLUTIONS TO PROBLEMS

A concept of the invention lies in a stereoscopic image data transmission device which includes:
an image data output unit that outputs a stereoscopic image data of a predetermined transmission format including left-eye image data and right-eye image data;
an overlapping information data processing unit that outputs data of overlapping information to overlap on an image by the left-eye image data and the right-eye image data;
an overlapping information data processing unit that converts the data of the overlapping information output from the overlapping information data output unit into transmission overlapping information data including data of left-eye overlapping information corresponding to the left-eye image data included in the stereoscopic image data of the predetermined transmission format and data of right-eye overlapping information corresponding to the right-eye image data; and
a data transmission unit that transmits multiplexed data stream that includes a first data stream including the stereoscopic image data output from the stereoscopic image data output unit and a second data stream including the transmission overlapping information data output from the overlapping information data processing unit.

In the invention, the image data output unit outputs stereoscopic image data of a predetermined transmission format including left-eye image data and right-eye image data. Examples of the transmission format of the stereoscopic image data include a side-by-side format, a top-and-bottom format, a full frame format, and a backward compatible format.

The overlapping information data output unit outputs data of overlapping information to overlap an image by left-eye image data and right-eye image data. Here, examples of the overlapping information include a subtitle, graphics, and a text to overlap an image. The overlapping information data processing unit converts the data of overlapping information into transmission overlapping information data including data of left-eye overlapping information and data of right-eye overlapping information.

Here, the data of the left-eye overlapping information is data corresponding to the left-eye image data included in the stereoscopic image data of a predetermined transmission format, and data used to generate display data of the left-eye overlapping information to overlap the left-eye image data included in the stereoscopic image data in the reception side. Further, the data of the right-eye overlapping information is data corresponding to the right-eye image data included in the stereoscopic image data of the predetermined transmission format, data used to generate display data of the right-eye overlapping information to overlap the right-eye image data included in the stereoscopic image data in the reception side.

For example, the data of the overlapping information is subtitle data (subtitle data of DVB), and the overlapping information data processing unit generates the data of the left-eye overlapping information and the data of the right-eye overlapping information as data of different objects of the same region. Further, for example, the data of the overlapping information is subtitle data, and the overlapping information data processing unit generates the data of the left-eye overlapping information and the data of the right-eye overlapping information as data of different regions of the same page.

Further, for example, the data of the overlapping information is subtitle data, and the overlapping information data processing unit generates the data of the left-eye overlapping information and the data of the right-eye overlapping information as data of regions of different pages. Further, for example, the data of the overlapping information is subtitle data, and the overlapping information data processing unit generates one of the data of the left-eye overlapping information and the data of the right-eye overlapping information as data of a region of a predetermined page and the other as data of a copied region copied from the region of the predetermined page.

Further, for example, the data of the overlapping information is subtitle data, and the overlapping information data processing unit generates the data of the left-eye overlapping information and the data of the right-eye overlapping information as data of different objects of the same region when a transmission format of the stereoscopic image data is a side-by-side format. Further, for example, the data of the overlapping information is subtitle data, and the overlapping information data processing unit generates the data of the left-eye overlapping information and the data of the right-eye overlapping information as data of different regions of the same page when a transmission format of the stereoscopic image data is a top-and-bottom format.

The data transmission unit transmits a multiplexed data stream including a first data stream and a second data stream. The first data stream includes the stereoscopic image data of the predetermined transmission format output from the image data output unit. The second data stream includes the transmission overlapping information data output from the overlapping information data output unit.

As described above, in the invention, the transmission overlapping information data including the data of the left-eye overlapping information and the data of the right-eye overlapping information corresponding to the transmission format is transmitted together with the stereoscopic image data. Thus, the reception side can easily generate display data of the left-eye overlapping information to overlap the left-eye image data included in the stereoscopic image data and display data of the right-eye overlapping information to overlap the right-eye image data included in the stereoscopic image data based on the transmission overlapping information data, and thus processing can be facilitated.

Further, in the invention, for example, the stereoscopic image data transmission device may further include a disparity information output unit that outputs disparity information between a left-eye image by the left-eye image data and a right-eye image by the right-eye image data, and the overlapping information data processing unit may bring disparity to occur between the left-eye overlapping information and the right-eye overlapping information by shifting at the least left-eye overlapping information or the right-eye overlapping information based on the disparity information output from the disparity information output unit. In this case, in the reception side, even though the process of brining disparity to occur between the left-eye overlapping information and the right-eye overlapping information is not performed, the consistency of a sense of perspective with each object in an image in a display of overlapping information such as a subtitle can be maintained in an optimal state.

Further, in the invention, for example, the stereoscopic image data transmission device may further include a disparity information generating unit that generates information of disparity which is brought to occur between the left-eye overlapping information and the right-eye overlapping information in each frame of a predetermined number of frame periods in which the overlapping information is displayed based on the disparity information output from the disparity information output unit, and the data transmission unit distinguish the information of the disparity, in each frame of the predetermined number of frame periods, generated by the disparity information generating unit from the data of the transmission overlapping information using identification information, includes the information of the disparity in the second data stream, and transmits the second data stream including the information of the disparity.

In this case, in the reception side, it is possible to bring predetermined disparity to occur between the left-eye overlapping information and the right-eye overlapping information based on information of disparity in each frame of a predetermined number of frame periods. For example, it is possible to bring disparity, which is based on a predetermined number of frame periods and a representative value such as a maximum value thereof or an average value thereof, to occur between the left-eye overlapping information and the right-eye overlapping information. Further, for example, it is possible to sequentially update disparity between the left-eye overlapping information and the right-eye overlapping information in a predetermined number of frame periods.

Further, in the invention, for example, the information of disparity, in each frame of a predetermined number of frame periods, generated by the disparity information generating unit may be offset information on information of disparity of a previous frame. In this case, the amount of data of the disparity information can be suppressed.

Further, in the invention, for example, the data transmission unit may insert identification information identifying that the transmission overlapping information data corresponding to a transmission format of the stereoscopic image data is included in the second data stream into the multiplexed data stream. In this case, in the reception side, it is possible to identify whether or not the transmission overlapping information data (overlapping information data for a stereoscopic image) corresponding to a transmission format of stereoscopic image data is included in the second data stream based on the identification information.

Further, another concept of the invention lies in a stereoscopic image data reception device which includes:
a data reception unit that receives a multiplexed data stream including a first data stream and a second data stream,
the first data stream including stereoscopic image data of a predetermined transmission format that includes left-eye image data and right-eye image data, and
the second data stream including transmission overlapping information data that includes data of left-eye overlapping information corresponding to the left-eye image data included in the stereoscopic image data of the predetermined transmission format and data of right-eye overlapping information corresponding to the right-eye image data,
an image data acquiring unit that acquires the stereoscopic image data from the first data stream included in the multiplexed data stream received by the data reception unit;
an overlapping information data acquiring unit that acquires the transmission overlapping information data from the second data stream included in the multiplexed data stream received by the data reception unit;
a display data generating unit that generates display data for displaying overlapping information on a left-eye image and a right-eye image in an overlapping manner based on the transmission overlapping information data acquired by the overlapping information data acquiring unit; and
a data synthesizing unit that obtains output stereoscopic image data by overlapping the display data generated by the display data generating unit on the stereoscopic image data acquired by the image data acquiring unit.

In the invention, the data reception unit receives the multiplexed data stream including the first data stream and the second data stream. The first data stream includes the stereoscopic image data of the predetermined transmission format including the left-eye image data and the right-eye image data. Further, the second data stream includes transmission overlapping information data (overlapping information data for a stereoscopic image) including the data of the left-eye overlapping information and the data of the right-eye overlapping information.

Here, the data of the left-eye overlapping information is data corresponding to the left-eye image data included in the stereoscopic image data of the predetermined transmission format, and data used to generate display data of the left-eye overlapping information to overlap the left-eye image data included in the stereoscopic image data. Further, the data of the right-eye overlapping information is data corresponding to the right-eye image data included in the stereoscopic image data of the predetermined transmission format, and data used to generate display data of the right-eye overlapping information to overlap the right-eye image data included in the stereoscopic image data.

The image data acquiring unit acquires the stereoscopic image data of the predetermined transmission format from the first data stream included in the multiplexed data stream received by the data reception unit. Further, the overlapping information data acquiring unit acquires the transmission overlapping information data from the second data stream included in the multiplexed data stream received by the data reception unit.

The display data generating unit generates display data for causing the overlapping information to be displayed to overlap the left-eye image and the right-eye image based on the transmission overlapping information data acquired by the overlapping information data acquiring unit. The data synthesizing unit causes the display data generated by the display data generating unit to overlap the stereoscopic image data acquired by the image data acquiring unit, whereby the output stereoscopic image data is obtained. For example, the output stereoscopic image data is transmitted to an external device through a digital interface unit such as the HDMI.

As described above, in the invention, the transmission overlapping information data including the data of the left-eye overlapping information and the data of the right-eye overlapping information corresponding to the transmission format is received together with the stereoscopic image data. Thus, the display data generating unit can easily generate display data of the left-eye overlapping information to overlap the left-eye image data included in the stereoscopic image data and display data of the right-eye overlapping information to overlap the right-eye image data included in the stereoscopic image data based on the transmission overlapping information data, and thus processing can be facilitated.

Further in the invention, the second data stream included in the multiplexed data stream received by the data reception unit may further include information of disparity which is brought to occur between the left-eye overlapping information and the right-eye overlapping information in each frame of a predetermined number of frame periods in which the overlapping information is displayed, the stereoscopic image data reception device may further include a disparity information acquiring unit that acquires information of disparity in each frame of a predetermined number of frame periods from the second data stream included in the multiplexed data stream received by the data reception unit, and the display data generating unit may bring predetermined disparity to occur between the left-eye overlapping information and the right-eye overlapping information based on the information of the disparity, in each frame of the predetermined number of frame periods, acquired by the disparity information acquiring unit.

In this case, for example, it is possible to bring disparity, which is based on a predetermined number of frame periods and a representative value such as a maximum value thereof or an average value thereof, to occur between the left-eye overlapping information and the right-eye overlapping information. Further, for example, it is possible to sequentially update disparity between the left-eye overlapping information and the right-eye overlapping information in a predetermined number of frame periods.

### EFFECTS OF THE INVENTION

According to the invention, transmission overlapping information data including data of left-eye overlapping information and data of right-eye overlapping information according to the transmission format is transmitted from a transmission side to a reception side together with stereoscopic image data. Thus, the reception side can easily generate display data of left-eye overlapping information to overlap left-eye image data included in the stereoscopic image data and display data of right-eye overlapping information to overlap right-eye image data included in the stereoscopic image data based on the transmission overlapping information data, and so processing can be facilitated. Thus, the reception side can easily perform processing of transmitting the received stereoscopic image data to the monitor device such as the television receiver via the digital interface such as HDMI without converting the transmission format.

### BRIEF DESCRIPTION OF DRAWINGS

Fig. 1 is a block diagram illustrating a configuration example of an image transceiving system according to an embodiment of the invention.
Fig. 2 is a block diagram illustrating a configuration example of a transmission data generating unit in a broadcasting station.
Fig. 3 is a diagram illustrating image data of a pixel format of 1920 x 1080p.
Fig. 4 is a diagram to describe a "top-and-bottom" format, a "side by side" format, a "full frame" format, a "frame sequential" format, or a backward compatible format, which is a transmission format of stereoscopic image data (3D image data).
Fig. 5 is a diagram to describe an example of detecting a disparity vector of a right-eye image to a left-eye image.
Fig. 6 is a diagram to describe that a disparity vector is obtained by a block matching method.
Fig. 7 is a diagram to describe a downsizing process executed by a disparity information generating unit of a transmission data generating unit.
Fig. 8 is a diagram illustrating a configuration example of a transport stream (bit stream data) including a video elementary stream, a subtitle elementary stream, and an audio elementary stream.
Fig. 9 is a diagram illustrating the structure of a PCS (page_composition_segment) configuring subtitle data.
Fig. 10 is a diagram illustrating a correspondence relation between each value of "segment_type" and a segment type.
Fig. 11 is a diagram to describe information (component_type = 0x15, 0x25) representing a format of a 3D subtitle which is newly defined.
Fig. 12 is a diagram to describe a configuration example (cases A to E) of subtitle data for a stereoscopic image (including a disparity information group) generated by a subtitle processing unit.
Fig. 13 is a diagram conceptually illustrating a method of generating subtitle data for a stereoscopic image of a "case A".
Fig. 14 is a diagram illustrating an example of a region and an object by subtitle data for a stereoscopic image generated in the "case A".
Fig. 15 is a diagram illustrating a generation example (an example 1) of each segment in the "case A".
Fig. 16 is a diagram illustrating a generation example (an example 2) of each segment in the "case A".
Fig. 17 is a diagram illustrating an example of syntax of an OTS (offset_temporal_sequence_segment) in which "segment_type = 0x48" is set.
Fig. 18 is a diagram illustrating data semantics of an OTS (offset_temporal_sequence_segment).
Fig. 19 is a diagram illustrating an example of updating an object start position "object_horizontal_position" in units of frames.
Fig. 20 is a diagram illustrating an example in which an object start position "object_horizontal_position" is initially set to a maximum value "Max (offset_sequence(n))," and then the position is maintained.
Fig. 21 is a diagram conceptually illustrating a method of generating subtitle data for a stereoscopic image of a "case B".
Fig. 22 is a diagram illustrating an example of a region and an object by subtitle data for a stereoscopic image generated in the "case B".
Fig. 23 is a diagram illustrating a generation example (an example 1) of each segment in the "case B".
Fig. 24 is a diagram illustrating a generation example (an example 2) of each segment in the "case B".
Fig. 25 is a diagram illustrating a generation example (an example 3) of each segment in the "case B".
Fig. 26 is a diagram illustrating an example of syntax of an SFI (stereo_format_indication_segment) in which "segment_type = 0x45" is set.
Fig. 27 is a diagram illustrating data semantics of an SFI (stereo_format_indication_segment).
Fig. 28 is a diagram conceptually illustrating a method of generating subtitle data for a stereoscopic image of a "case C".
Fig. 29 is a diagram illustrating an example of a region and an object by subtitle data for a stereoscopic image generated in the "case C".
Fig. 30 is a diagram illustrating a generation example (an example 1) of each segment in the "case C".
Fig. 31 is a diagram illustrating a generation example (an example 2) of each segment in the "case C".
Fig. 32 is a diagram illustrating a generation example (an example 3) of each segment in the "case C".
Fig. 33 is a diagram illustrating a generation example (an example 4) of each segment in the "case C".
Fig. 34 is a diagram conceptually illustrating a method of generating subtitle data for a stereoscopic image of a "case D".
Fig. 35 is a diagram illustrating an example of a region or copied_region and an object by subtitle data for a stereoscopic image generated in the "case D".
Fig. 36 is a diagram illustrating an example of syntax of an RCP (region_copy_segment) in which "segment_type = 0x47" is set.
Fig. 37 is a diagram illustrating data semantics of an RCP (region_copy_segment).
Fig. 38 is a diagram illustrating a generation example (an example 1) of each segment in the "case D".
Fig. 39 is a diagram illustrating a generation example (an example 2) of each segment in the "case D".
Fig. 40 is a diagram illustrating an example of syntax of an OSS (offset_sequence_segment) in which "segment_type = 0x44" is set.
Fig. 41 is a diagram illustrating data semantics of an OSS (offset_sequence_segment).
Fig. 42 is a diagram conceptually illustrating a method of generating subtitle data for a stereoscopic image of a "case E (side-by-side)".
Fig. 43 is a diagram illustrating an example of a region and an object by subtitle data for a stereoscopic image generated in the "case E (side-by-side)".
Fig. 44 is a diagram illustrating a generation example of each segment in the "case E (side-by-side)".
Fig. 45 is a diagram illustrating another generation example of each segment in the "case E (side-by-side)".
Fig. 46 illustrates an example of updating an object start position "object_horizontal_position" in units of frames.
Fig. 47 is a diagram illustrating an example in which an object start position "object horizontal_position" is initially set to a maximum value "Max (offset_sequence(n))," and then the position is maintained.
Fig. 48 is a diagram conceptually illustrating a method of generating subtitle data for a stereoscopic image of the "case E (top-and-bottom)".
Fig. 49 is a diagram illustrating an example of a region by subtitle data for a stereoscopic image generated in the "case E (top-and-bottom)".
Fig. 50 is a diagram illustrating a generation example of each segment in the "case E (top-and-bottom)".
Fig. 51 is a diagram illustrating an example of updating a region start position "region_horizontal_position" in units of frames.
Fig. 52 is a diagram illustrating an example of a region by subtitle data for a stereoscopic image generated in the "case E (full frame or backward compatible)".
Fig. 53 is a diagram illustrating a generation example of each segment in the "case E (full frame or backward compatible)".

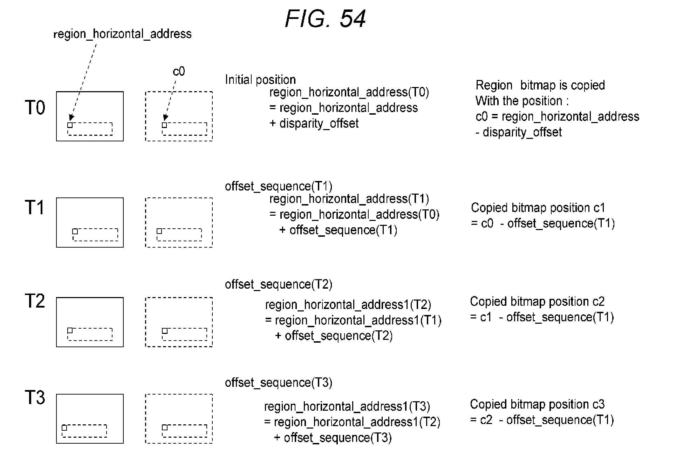

Fig. 54 is a diagram illustrating an example of updating a region start position "region_horizontal_position" in units of frames.
Fig. 55 is a diagram conceptually illustrating OSS setting and the flow of stereoscopic image data and subtitle data in the "case E (side-by-side)".
Fig. 56 is a diagram conceptually illustrating OSS setting and the flow of stereoscopic image data and subtitle data in the "case E (top-and-bottom)".
Fig. 57 is a diagram conceptually illustrating OSS setting and the flow of stereoscopic image data and subtitle data in the "case E (full frame or backward compatible)".
Fig. 58 is a diagram illustrating a display example of a subtitle on an image, and a sense of perspective of a background, a foreground object, a subtitle.
Fig. 59 is a diagram illustrating a display example of a subtitle on an image, and a left-eye subtitle LGI and a right-eye subtitle RGI for displaying a subtitle.
Fig. 60 is a block diagram illustrating a configuration example of a set-top box configuring an image transceiving system.
Fig. 61 is a block diagram illustrating a configuration example of a bit stream processing unit configuring a set-top box.
Fig. 62 is a block diagram illustrating a configuration example of a television receiver configuring an image transceiving system.
Fig. 63 is a block diagram illustrating another configuration example of an image transceiving system, and
Fig. 64 is a diagram to describe a relation between display positions of left and right images of an object on a screen and a reproduction position of a stereoscopic image when a stereoscopic image is displayed using binocular parallax.

### MODE FOR CARRYING OUT THE INVENTION

Hereinafter, a mode for carrying out the present invention (hereinafter, referred to as an "embodiment") will be described. The description will be presented in the following order:
1. Embodiment
2. Modified Example

### <1. Embodiment>

### [Configuration Example of Image Transceiving System]

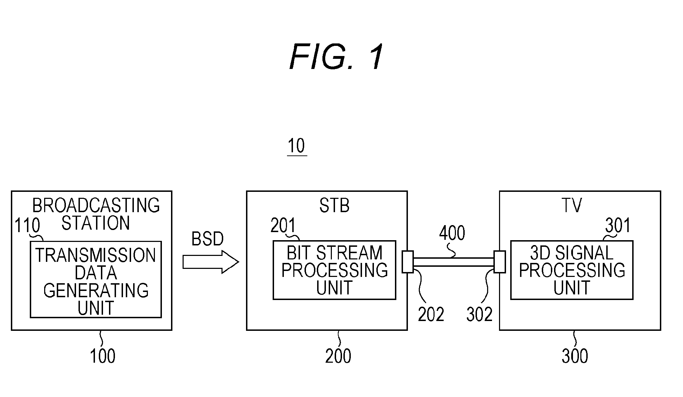

Fig. 1 illustrates a configuration example of an image transceiving system 10 according to an embodiment. The image transceiving system 10 includes a broadcasting station 100, a set-top box (STB) 200, and a television receiver (TV) 300.

The set-top box 200 is connected with the television receiver 300 through a digital interface of HDMI (High Definition Multimedia Interface). The set-top box 200 is connected with the television receiver 300 using an HDMI cable 400. An HDMI terminal 202 is disposed in the set-top box 200. An HDMI terminal 302 is disposed in the television receiver 300. One end of the HDMI cable 400 is connected to the HDMI terminal 202 of the set-top box 200, and the other end of the HDMI cable 400 is connected to the HDMI terminal 302 of the television receiver 300.

### [Description of Broadcasting Station]

The broadcasting station 100 transmits bit stream data BSD through a broadcast wave. The broadcasting station 100 includes a transmission data generating unit 110 that generates the bit stream data BSD. The bit stream data BSD includes stereoscopic image data, audio data, data of overlapping information, and the like. The stereoscopic image data has a predetermined transmission format and includes left-eye image data and right-eye image data which are used to display a stereoscopic image. The overlapping information generally refers to a subtitle, graphics information, text information, or the like, but refers a subtitle in this embodiment.

### "Configuration Example of Transmission Data Generating Unit"

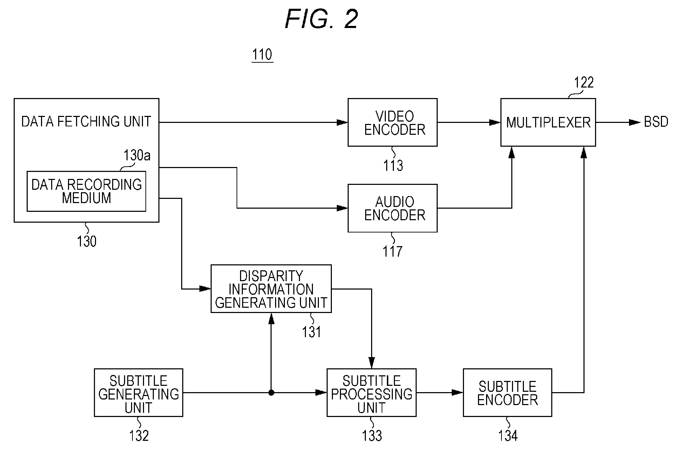

Fig. 2 illustrates a configuration example of the transmission data generating unit 110 in the broadcasting station 100. The transmission data generating unit 110 includes a data fetching unit (archive unit) 130, a disparity information generating unit 131, a video encoder 113, an audio encoder 117, a subtitle generating unit 132, a subtitle processing unit 133, a subtitle encoder 134, and a multiplexer 122.

For example, the data recording medium 130a is detachably mounted to the data fetching unit 130. In the data recording medium 130a, stereoscopic image data including left-eye image data and right-eye image data remains recorded, and audio data and disparity information remain recorded in association with the stereoscopic image data. The data fetching unit 130 fetches the stereoscopic image data, the audio data, and the disparity information from the data recording medium 130a, and outputs the stereoscopic image data, the audio data, and the disparity information. Examples of the data recording medium 130a include disk-shaped recording medium and a semiconductor memory.

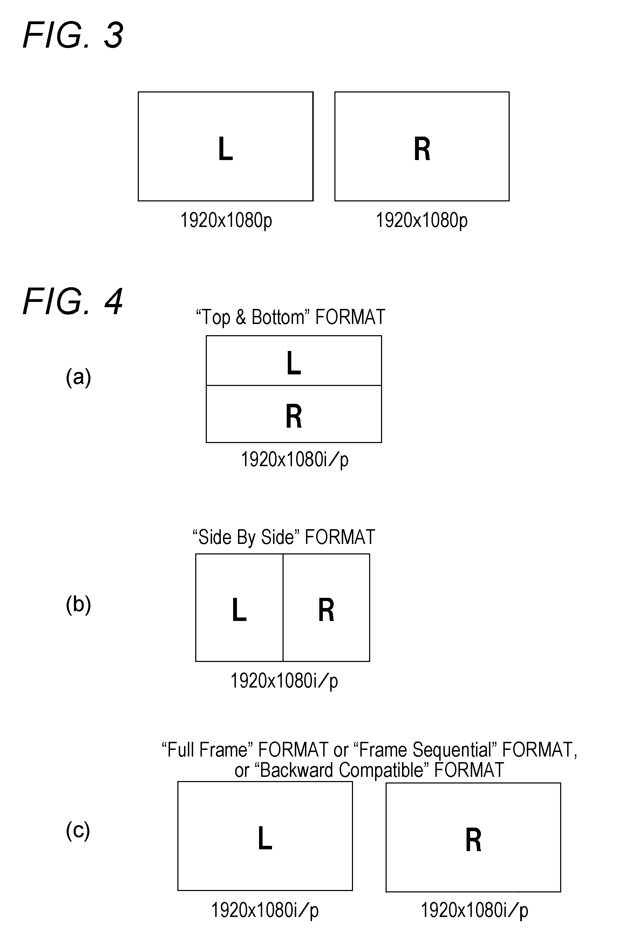

The stereoscopic image data recorded in the data recording medium 130a is stereoscopic image data of a predetermined transmission format. An example of a transmission format of stereoscopic image data (3D image data) will be described. Here, the first to third transmission formats are described, but any other transmission format may be used. Here, a case in which each of left eye (L) image data and right eye (R) image data is image data with a pixel format of a predetermined resolution, for example, 1920 x 1080p as illustrated in Fig. 3 will be described as an example.

The first transmission format is a top-and-bottom format, and is a format in which data of each line of the left-eye image data is transmitted in the first half in the vertical direction, and data of each line of the left-eye image data is transmitted in the second half in the vertical direction as illustrated in Fig. 4(a). In such a case, since the lines of the left-eye image data and the lines of the right-eye image data are thinned out to 1/2, the vertical resolution becomes half of that of the original signal.

The second transmission format is a side-by-side format, and is a format in which pixel data of the left-eye image data is transmitted in the first half in a horizontal direction, and pixel data of the right-eye image data is transmitted in the second half in the horizontal direction as illustrated in Fig. 4(b). In such a case, pixel data of each one of the left-eye image data and the right-eye image data in the horizontal direction is thinned out to 1/2. The horizontal resolution becomes half of that of the original signal.

The third transmission format is a full frame format, a frame sequential format, or a backward compatible format, and is a format in which left-eye image data and right-eye image data are switched and transmitted sequentially in units of frames as illustrated in Fig. 4(c).

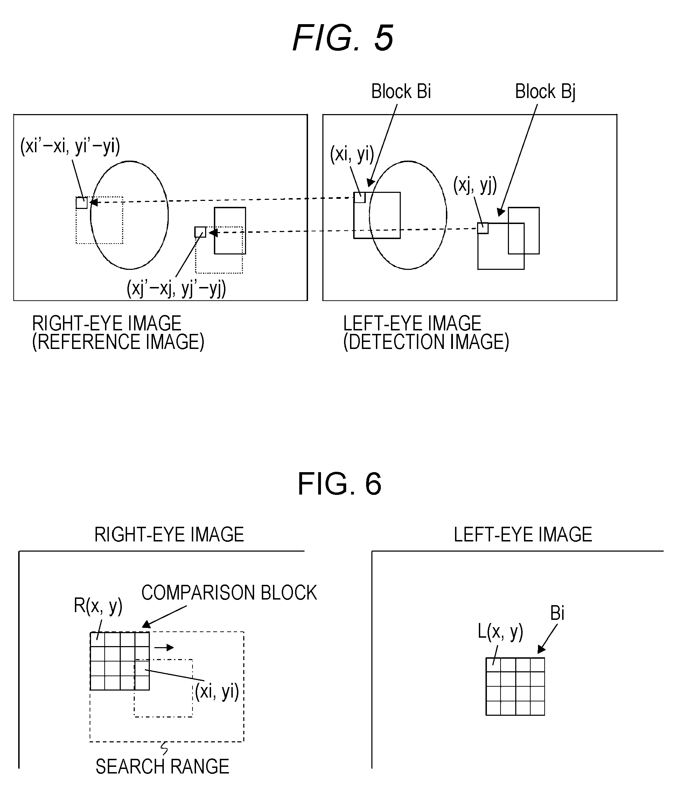

For example, the disparity information recorded in the data recording medium 130a refers to a disparity vector of each pixel configuring an image. An example of detecting a disparity vector will be described. Here, an example will be described in which a disparity vector of a right-eye image with respect to a left-eye image is detected. As illustrated in Fig. 5, the left-eye image is set as a detection image, and the right-eye image is set as a reference image. In this example, disparity vectors at the positions of (xi, yi) and (xj, yj) are detected.

A case will be described as an example in which a disparity vector at the position of (xi, yi) is detected. In this case, in the left-eye image, a pixel located at the position of (xi, yi) is set as the upper left side, and, for example, a pixel block (disparity detection block) Bi of 4 x 4, 8 x 8, or 16 x 16 is set. Then, in the right-eye image, a pixel block that matches the pixel block Bi is searched for.

In such a case, in the right-eye image, a search range having the position of (xi, yi) as its center is set, and respective pixels within the search range are sequentially set as a pixel of interest, and comparison blocks, for example, of 4 x 4, 8 x 8, or 16 x 16, which are the same as the above-described pixel block Bi, are sequentially set.

A sum of absolute values of differences between corresponding respective pixels of the pixel block Bi and the comparison blocks that are sequentially set is calculated. Here, as illustrated in Fig. 6, when a pixel value of the pixel block Bi is L(x, y) and a pixel value of the comparison block is R(x, y), a sum of the absolute values of differences between the pixel block Bi and a specific comparison block is represented as ∑|L(x, y) - R(x, y)|.

When n pixels are included in the search range set in the right-eye image, n sums S1 to Sn are finally acquired, and a minimum sum Smin is selected from among them. Then, the position (xi', yi') of the pixel located on the upper left side can be acquired from the comparison block from which the sum Smin is acquired. Accordingly, a disparity vector at the position of (xi, yi) is detected as (xi'-xi, yi'-yi). Although detailed description will not be presented, also for a disparity vector at the position of (xj, yj), a pixel located at the position of (xj, yj) is set as the upper left side in the left-eye image, and a pixel block Bj, for example, of 4 x 4, 8 x 8, or 16 x 16 is set, so that the disparity vector can be detected in a similar process.

Returning to Fig. 2, the video encoder 112 encodes the stereoscopic image data fetched from the data fetching unit 130 using MPEG4-AVC, MPEG2, VC-1, or the like, and generates a video data stream (video elementary stream). The audio encoder 113 encodes the audio data fetched from a data fetching unit 111 using AC3, AAC, or the like, and generates an audio data stream (audio elementary stream).

The subtitle generating unit 132 generates subtitle data which is subtitle data of DVB (digital video broadcasting). The subtitle data is 2D image subtitle data. The subtitle generating unit 132 configures an overlapping information data output unit.

The disparity information generating unit 131 executes a downsizing process on the disparity information output from the data fetching unit 130, that is, a disparity vector (a disparity vector in the horizontal direction) of each pixel, and generates a disparity vector corresponding to each region of each page of the subtitle data. The disparity information generating unit 131 configures a disparity information output unit. The disparity information applied to the subtitle may be attached in units of pages, in units of regions, or in units of objects. The disparity information needs not be necessarily generated by the disparity information generating unit 131 and may be separately supplied from the outside.

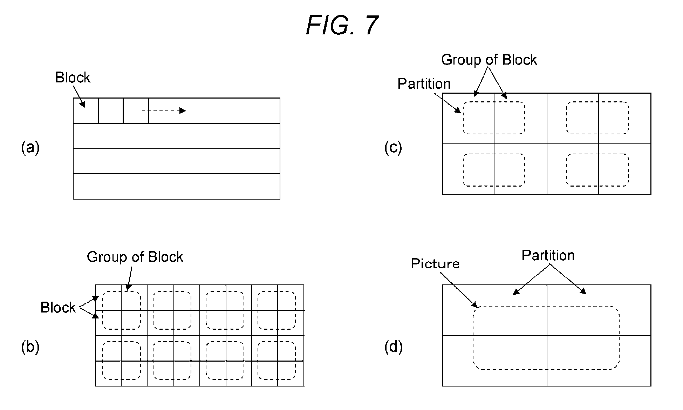

Fig. 7 illustrates an example of the downsizing process executed by the disparity information generating unit 131. First, disparity information generating unit 134 obtains a disparity vector of each block using a disparity vector of each pixel as illustrated in Fig. 7(a). As described above, a block corresponds to an upper layer of a pixel located in a lowermost layer, and is configured by dividing an image (picture) region into a predetermined size in a horizontal direction and a vertical direction. Then, for example, a disparity vector having a largest value among disparity vectors of all pixels present in a block is selected as the disparity vector of each block.

Next, the disparity information generating unit 131 obtains a disparity vector of each group (group of block) using a disparity vector of each block as illustrated in Fig. 7(b). A group corresponds to an upper layer of a block, and is obtained by grouping a plurality of neighboring blocks together. In the example of Fig. 7(b), each group is configured with 4 blocks bound by a dotted frame. Then, for example, a disparity vector having a largest value among disparity vectors of all blocks in a corresponding group is selected as of a disparity vector of each group.

Next, the disparity information generating unit 131 obtains a disparity vector of each partition using a disparity vector of each group as illustrated in Fig. 7(c). A partition corresponds to an upper layer of a group, and is obtained by grouping a plurality of neighboring groups together. In the example of Fig. 7(c), each partition is configured with 2 groups bound by a dotted frame. Then, for example, a disparity vector having a largest value among disparity vectors of all groups in a corresponding partition is selected as of a disparity vector of each partition.

Next the disparity information generating unit 131 obtains a disparity vector of the entire picture (entire image) located in a highest layer using a disparity vector of each partition as illustrated in Fig. 7(d). In the example of Fig. 7(d), four partitions bound by a dotted frame are included in the entire picture. Then, for example, a disparity vector having a largest value among disparity vectors of all partitions included in the entire picture is selected as of a disparity vector of the entire picture.

In the above-described way, the disparity information generating unit 131 can obtained the disparity vector of each region of each of layers including the block, the group, the partition, and the entire picture by executing the downsizing process on the disparity vector of each pixel located in the lowermost layer. In the example of the downsizing process illustrated in Fig. 7, disparity vectors of four layers of the block, the group, the partition, and the entire picture are finally obtained in addition to the layer of the pixel. However, the number of layers, a region dividing method of each layer, and the number of regions are not limited to the above example.

Returning to Fig. 2, the subtitle processing unit 133 converts the subtitle data generated by the subtitle generating unit 132 into subtitle data for a stereoscopic image (3D image) corresponding to a transmission format of stereoscopic image data fetched by the data fetching unit 130. The subtitle processing unit 133 configures an overlapping information data processing unit, and the converted subtitle data for the stereoscopic image data configures transmission overlapping information data.

The subtitle data for the stereoscopic image includes left-eye subtitle data and right-eye subtitle data. Here, the left-eye subtitle data corresponds to left-eye image data included in the stereoscopic image data and is used for the reception side to generate display data of a left-eye subtitle overlapping left-eye image data included in the stereoscopic image data. Further, the right-eye subtitle data corresponds to right-eye image data included in the stereoscopic image data and is used for the reception side to generate display data of a right-eye subtitle overlapping right-eye image data included in the stereoscopic image data.

The subtitle processing unit 133 brings disparity to occur between the left-eye subtitle and the right-eye subtitle by shifting at least the left-eye subtitle or the right-eye subtitle based on the disparity vector corresponding to each region of each page from the disparity information generating unit 131. By bringing disparity to occur between the left-eye subtitle and the right-eye subtitle as described above, and in the reception side, even though the process of brining disparity to occur between the left-eye subtitle and the right-eye subtitle is not performed, the consistency of a sense of perspective with each object in an image in a display of a subtitle can be maintained in an optimal state.

Further, the subtitle processing unit 133 generates information of disparity which is brought to occur between the left-eye subtitle and the right-eye subtitle in each frame of a predetermined number of frame periods in which a subtitle is displayed, based on the disparity vector corresponding to each region of each page from the disparity information generating unit 131. Hereinafter, information of disparity in frames of a predetermined number of frame periods is referred to appropriately a "disparity information group" for simplicity of description. In this embodiment, offset information on information of disparity of a previous frame is used as information of disparity of each frame configuring the disparity information group, and so the amount of data is suppressed.

The subtitle data is configured with segments such as a PCS (page composition segment), a RSC (region composition segment), and an ODS (object data segment). The PCS designates a region position in a page. The RCS designates the size of region or an encoding mode of an object, and designates the start position of an object. The ODS includes encoded pixel data. In this embodiment, a new segment is defined, and the disparity information group is included in the segment. Thus, the disparity information group is discriminated by the subtitle data and the segment type. The details of the process of the subtitle processing unit 133 will be further described later.

The subtitle encoder 134 generates a subtitle data stream (a subtitle elementary stream) including the subtitle data for the stereoscopic image and the disparity information group output from the subtitle processing unit 133. The multiplexer 122 obtains a multiplexed data stream used as bit stream data (transport stream) BSD by multiplexing data streams output from the video encoder 113, the audio encoder 117, and the subtitle encoder 134.

In this embodiment, the multiplexer 122 inserts identification information identifying inclusion of the subtitle data for the stereoscopic image into the subtitle data stream. Specifically, Stream_content ('0x03' = DVB subtitles) & Component_type (for 3D target) is described in "Component_Descriptor" included in an EIT (event information table). Component_type (for 3D target) is newly defined to represent the subtitle data for the stereoscopic image.

An operation of the transmission data generating unit 110 illustrated in Fig. 2 will be briefly described. The stereoscopic image data output from the data fetching unit 130 is supplied to the video encoder 113. The video encoder 113 encodes the stereoscopic image data using MPEG4-AVC, MPEG2, VC-1, or the like, and generates a video data stream including encoded video data. The video data stream is supplied to the multiplexer 122.

The audio data output from the data fetching unit 130 is supplied to the audio encoder 117. The audio encoder 117 encodes the audio data using MPEG-2Audio AAC, MPEG-4 AAC, or the like, and generates an audio data stream including encoded audio data. The audio data stream is supplied to the multiplexer 122.

The subtitle generating unit 132 generates subtitle data (for a 2D image) which is subtitle data of DVB. The subtitle data is supplied to the disparity information generating unit 131 and the subtitle processing unit 133.

The disparity information, that is, the disparity vector of each pixel, output from the data fetching unit 130 is supplied to the disparity information generating unit 131. The disparity information generating unit 131 executes the downsizing process on the disparity vector of each pixel, and generates the disparity vector corresponding to each region of each page of the subtitle data. The disparity vector corresponding to each region is supplied to the subtitle processing unit 133.

The subtitle processing unit 133 converts the 2D image subtitle data generated by the subtitle generating unit 132 into subtitle data for a stereoscopic image corresponding to transmission format of stereoscopic image data fetched from the data fetching unit 130. The subtitle data for the stereoscopic image includes left-eye subtitle data and right-eye subtitle data. In this case, the subtitle processing unit 133 brings disparity to occur between the left-eye subtitle and the right-eye subtitle by shifting at least the left-eye subtitle or the right-eye subtitle based on the disparity vector corresponding to each region of each page from the disparity information generating unit 131. Alternatively, data is generated in which a subtitle of one eye is included and disparity information is added to a subtitle of the other eye and transmitted to cause the subtitle of the other eye to be displayed at an offset position corresponding to the disparity information.

The subtitle processing unit 133 generates a disparity information group (information of disparity which is brought to occur between the left-eye subtitle and the right-eye subtitle in frames of a predetermined number of frame periods in which a subtitle is displayed), based on the disparity vector corresponding to each region of each page from the disparity information generating unit 131. In this case, offset information on information of disparity of a previous frame is used as information of disparity of each frame configuring the disparity information group so as to suppress the amount of data.

The subtitle data for the stereoscopic image and the disparity information group obtained by the subtitle processing unit 133 are supplied to the subtitle encoder 134. The subtitle encoder 134 generates a subtitle data stream including the subtitle data for the stereoscopic image and the disparity information group. The subtitle data stream includes a newly defined segment including the disparity information group as well as the segments, such as the PCS, the RCS, and the ODS, in which the subtitle data for the stereoscopic image is included.

The data streams from the video encoder 113, the audio encoder 117, and the subtitle encoder 134 are supplied to the multiplexer 122 as described above. Then, the multiplexer 122 obtains a multiplexed data stream in which the data streams are multiplexed in the form of a packet as bit stream data (transport stream) BSD.

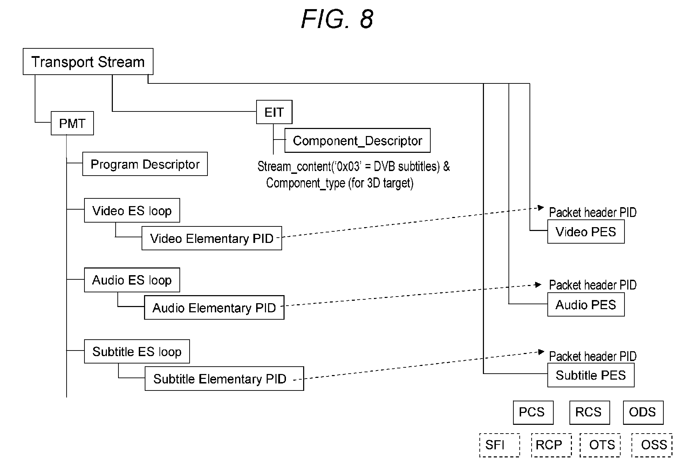

Fig. 8 illustrates a configuration example of a transport stream (bit stream data). The transport stream includes PES packets obtained by packetizing the elementary streams. In this configuration example, a PES packet "Video PES" of a video elementary stream, a PES packet "Audio PES" of an audio elementary stream, and a PES packet "Subtitle PES" of a subtitle elementary stream are included.

In this embodiment, the subtitle elementary stream (subtitle data stream) includes subtitle data for a stereoscopic image. The subtitle elementary stream includes conventionally well-known segments such as the PCS (page composition segment), the RCS (region composition segment), and the ODS (object data segment).

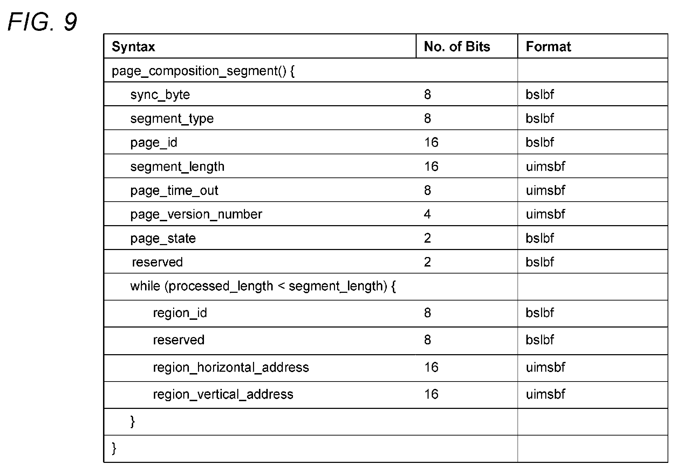

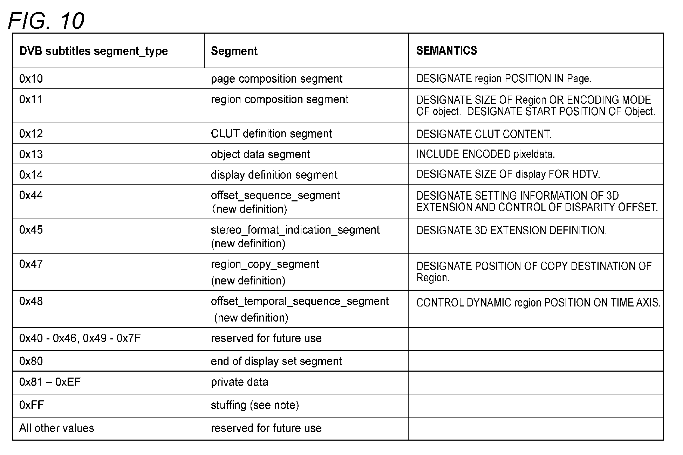

Fig. 9 illustrates the structure of the PCS (page_composition_segment). The segment type of the PCS is "0x10" as illustrated in Fig. 10. "region_horizontal_address" and "region_vertical_address" represent the start position of a region. The structures of the other segments such as the RSC and the ODS are not illustrated in the drawing. For example, the segment type of the RCS is "0x11" as illustrated in Fig. 10. Further, for example, the segment type of the ODS is "0x13" as illustrated in Fig. 10.

Further, segments such as an SFI (stereo_format_indication_segment), an RCP (region_copy_segment), an OTS (offset_temporal_sequence_segment), and an OSS (offset_sequence_segment) are included in the subtitle data as necessary. The SFI designates a 3D extension definition. The RCP defines the position of a copy destination of a region. The OTS controls a dynamic region position on a time axis. The OSS designates setting information of 3D extension and control of a disparity offset.

For example, as illustrated in Fig. 10, the segment type of the OSS is "0x44," the segment type of SFI is "0x45," the segment type of RCP is "0x47," and the segment type of the OTS is "0x48." The detailed structures of the SFI, the RCP, the OTS, and the OSS segments will be described later. Each of the SFI, the RCP, the OTS, and the OSS can be independently defined. For example, only SFI, SFI and OTS, or only OSS is present, and they are added to the existing segment, corresponding to each case.

The transport stream includes a PMT (program map table) as PSI (program specific information). The PSI is information representing a program to which each elementary stream included in the transport stream belongs. The transport stream further includes an EIT (event information table) as SI (serviced information) to perform management of an event unit. Metadata of a program unit is described in the EIT.

A program descriptor describing information related to the entire program is present in the PMT. Further, an elementary loop having information related to each elementary stream is present in the PMT. In this configuration example, a video elementary loop, an audio elementary loop, and a subtitle elementary loop are present. In each elementary loop, information such as a packet identifier (PID) is arranged for each stream, and even though not illustrated in the drawings, a descriptor describing information related to the elementary stream is also arranged.

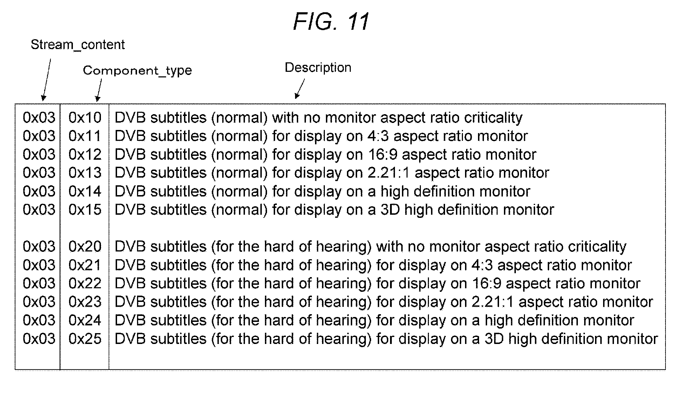

"Component_Descriptor" is inserted in the EIT. In this embodiment, it is possible to identify that Stream_content ('0x03' = DVB subtitles) & Component_type (for 3Dtarget) is described in the component descriptor, and a subtitle data for a stereoscopic image is included in the subtitle data stream. In this embodiment, as illustrated in Fig. 11, when "stream_content" of "component_descriptor" representing stream content represents a subtitle, information (Component_type = 0x15, 0x25) representing a format of a 3D subtitle is newly defined.

### [Process of Subtitle Processing Unit]

The details of the process of the subtitle processing unit 133 of the transmission data generating unit 110 illustrated in Fig. 2 will be described. As described above, the subtitle processing unit 133 converts 2D image subtitle data into subtitle data for a stereoscopic image, and generates information of disparity (disparity information group) which is brought to occur between the left-eye subtitle and the right-eye subtitle in each frame of a predetermined number of frame periods in which a subtitle is displayed.

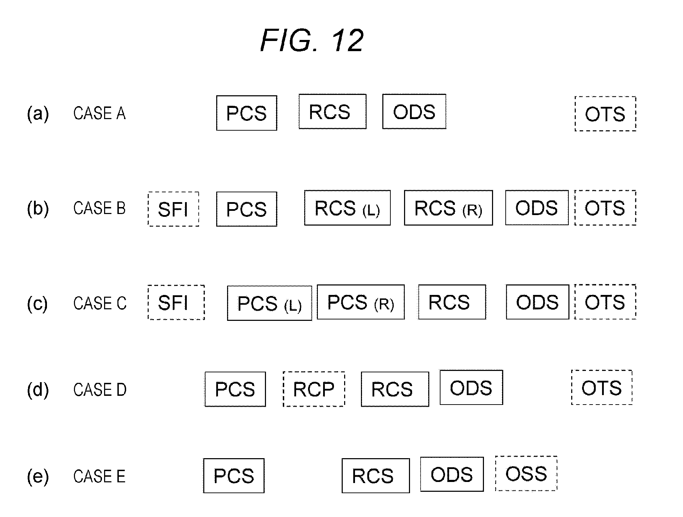

For example, the subtitle data (including the disparity information group) of the subtitle processing unit 133 has a configuration of any one of cases A to E illustrated in Fig. 12. In the "case A", left-eye subtitle data and right-eye subtitle data are generated as data of different objects of the same region. In the "case A", as illustrated in Fig. 12(a), the OTS is used as a newly defined segment together with the conventionally well-known segments such as the PCS, the RCS, and the ODS. Fig. 12 illustrates only the PCS, the RCS, and the ODS as the conventionally well-known segments, and the other segments are not illustrated.

In the "case B", left-eye subtitle data and right-eye subtitle data are generated as data of different regions of the same page. In this case, for example, the left-eye subtitle data is generated as data of a region whose region ID (Region_id) is an even number, and the right-eye subtitle data is generated as data of a region whose region ID (Region_id) is an odd number. In the "case B", as illustrated in Fig. 12(b), the SFI and the OTS are used as newly defined segments together with the conventionally well-known segments such as the PCS, the RCS, and the ODS.

In the "case C", left-eye subtitle data and right-eye subtitle data are generated as data of regions of different pages. In this case, for example, the left-eye subtitle data is generated as data of a region of a page whose page ID (Page_id) is an even number. Further, the right-eye subtitle data is generated as data of a region of a page whose page ID (Page_id) is an odd number. In the "case C", as illustrated in Fig. 12(c), the SFI and the OTS are used as newly defined segments together with the conventionally well-known segments such as the PCS, the RCS, and the ODS.

In the "case D", one of left-eye subtitle data and right-eye subtitle data is generated as data of a region of a predetermined page. Further, the other of left-eye subtitle data and right-eye subtitle data is generated as data of a copied region (copied_region) copied from data of the region. In the "case D", as illustrated in Fig. 12(d), the RCP and the OTS are used as newly defined segments together with the conventionally well-known segments such as the PCS, the RCS, and the ODS.

In the "case E", left-eye subtitle data and right-eye subtitle data are generated according to a transmission format of stereoscopic image data. For example, when a transmission format is the side-by-side format, left-eye subtitle data and right-eye subtitle data are generated as data of the same region of the same page. At this time, setting is made so that an object can be arranged at a predetermined position in a region corresponding to the left-eye subtitle and the right-eye subtitle. Further, for example, when a transmission format is the top-and-bottom format, the left-eye subtitle data and the right-eye subtitle data are generated as data of different regions of the same page. In the "case E", as illustrated in Fig. 12(e), the OSS is used as a newly defined segment together with the conventionally well-known segments such as the PCS, the RCS, and the ODS.

### [Regarding Case A]

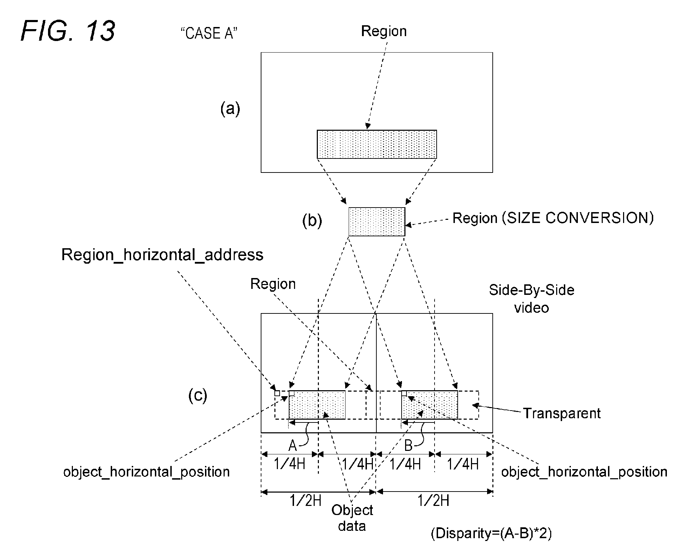

Fig. 13 conceptually illustrates a method of generating subtitle data for a stereoscopic image of the "case A". Here, a description will be made in connection with an example in which a transmission format of stereoscopic image data is the side-by-side format. Fig. 13(a) illustrates a region by 2D image subtitle data.

First, the subtitle processing unit 133 converts the size of a region by the 2D image subtitle data into the size appropriate for the side-by-side format as illustrated in Fig. 13(b), and then generates bitmap data of the converted size.

Next, the subtitle processing unit 133 sets bitmap data having the converted size as a component of a region of subtitle data for a stereoscopic image as illustrated in Fig. 13(c). At this time, the start position (region_horizontal_address) of each object is set to a position which is shifted by a distance (A - B = disparity/2) corresponding to disparity between a left-eye image (left view) and a right-eye image (right view).

The subtitle processing unit 133 converts 2D image subtitle data into subtitle data for a stereoscopic image as described above, and generates segments such as the PCS, the RCS, and the ODS corresponding to the subtitle data for the stereoscopic image.

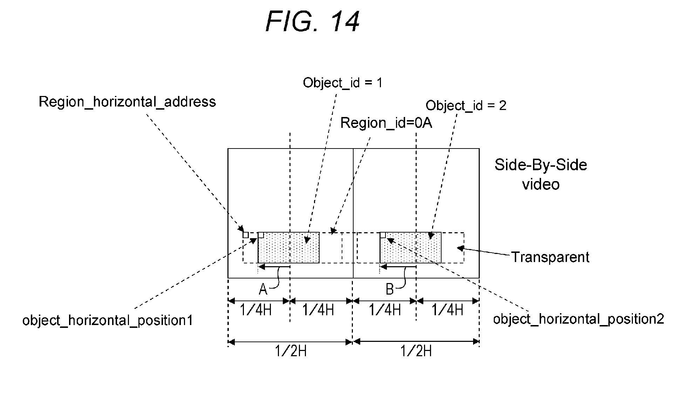

Fig. 14 illustrates an example of a region and an object by subtitle data for a stereoscopic image generated in the "case A". Here, the start position of a region is "Region_horizontal_address1". For an object at a left-eye image (left view) side, the start position is "object_horizontal_position", and "Object_id = 1". For an object at a right-eye image (right view) side, the start position is "object_horizontal_position2", and "Object_id = 2".

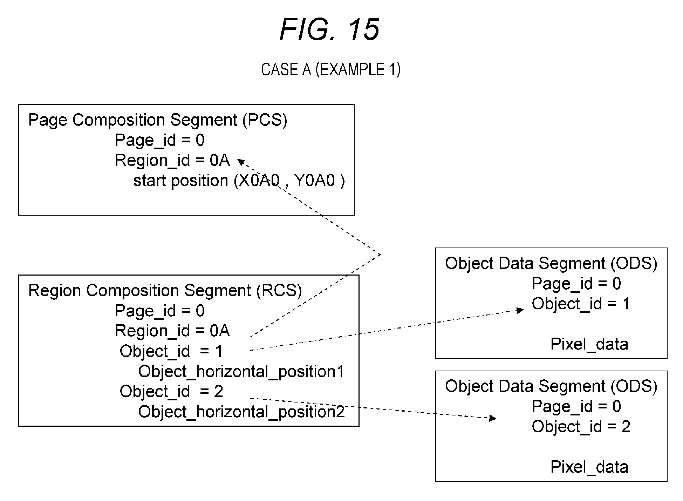

Fig. 15 illustrates a generation example (an example 1) of each segment in the "case A". In this generation example, the start position (region_horizontal_address) of a region (Region_id = 0A) remains designated in the PCS (page composition segment). Further, in the RCS (region composition segment) of "Region_id = 0A," the ODS of "Object_id = 1" is referred to, and the start position "object_horizontal_position1" of the object remains designated. Further, in the RCS (region composition segment) of "Region_id = 0A", the ODS of "Object_id = 2" is referred to, and the start position "object_horizontal_position2" of the object remains designated. In this generation example (example 1), the OTS is not generated.

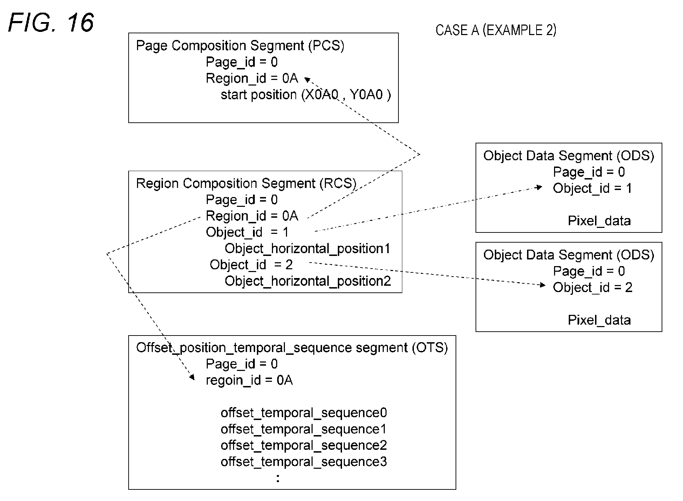

Fig. 16 illustrates a generation example (an example 2) of each segment in the "case A". In this generation example, not only the PCS, the RCS, and the ODS are generated similarly to the generation example (example 1) illustrated in Fig. 15, but also the OTS (offset_temporal_sequence_segment) is generated. The disparity information group is included in the segment of the OTS. As described above, the disparity information group refers to information of disparity which is brought to occur between the left-eye subtitle and the right-eye subtitle in each frame of a predetermined number of frame periods in which a subtitle is displayed. Here, offset information on information of disparity of a previous frame is used as information of disparity of each frame configuring the disparity information group so as to suppress the amount of data.

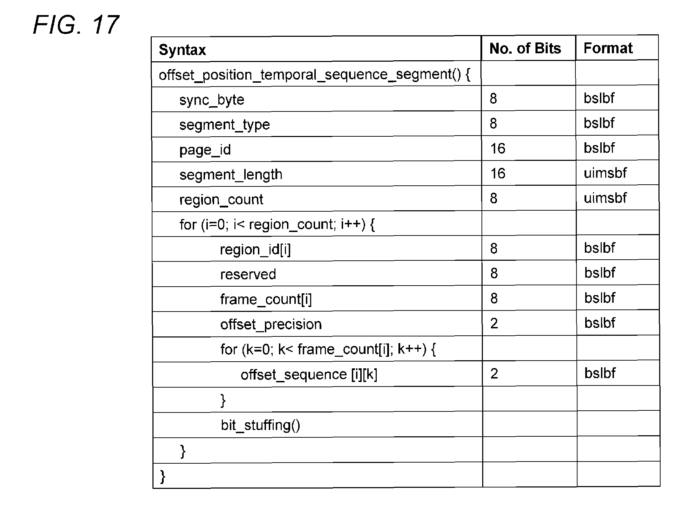

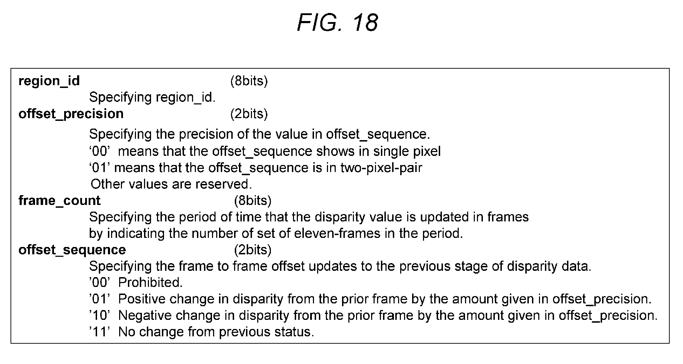

Fig. 17 illustrates an example of syntax of the OTS (offset_temporal_sequence_segment). Fig. 18 illustrates main data semantics of the OTS. In this syntax, information of "Sync_byte," "segment_type," "page_id," and "segment_length" are included. "segment_type" is 8-bit data representing the segment type, and "0x48" representing the OTS is herein used. "segment_length" is 8-bit data representing the length (size) of a segment. This data represents the number of bytes following "segment_length" as the length of a segment.

"region_count" represents the number of regions in a page. In the OTS, disparity information groups of regions, which are equal in number to the number of regions, identified by "region_id" are included. "frame_count" represents the number of frames in which offset_sequence is supplied during a display frame period.

"offset_sequence" is 2-bit information used as offset information on disparity information of a previous frame. "offset_sequence = 01" represents that an offset value is "+1". "offset_sequence = 10" represents that an offset value is "-1". In addition, "offset_sequence = 11" represents that an offset value does not change from a previous frame. "offset_precision" is 1-bit information representing the precision of "1" in the offset value represented by "offset_sequence", that is, the number of pixels of "1". "offset_precision = 0" represents that "1" in the offset value is in one pixel. "offset_precision = 1" represents that "1" in the offset value is in two pixels.

As described above, when the OTS is included in a subtitle data stream, the reception side can bring predetermined disparity to occur between a left-eye subtitle and a right-eye subtitle based on an offset value "offset_sequence" in each frame of a predetermined number of frame periods. For example, the reception side can sequentially update disparity between a left-eye subtitle and a right-eye subtitle.

In this case, the reception side maintains backward compatibility by the OTS and can simply update an object start position "object_horizontal_position" in units of frames. In other words, "object_horizontal_position" is updated in units of "Object_id" such that a difference amount designated by "offset_sequence(T)" is added to an initial position of a frame T0 (an initial frame) in each frame. As a result, disparity between a left-eye subtitle and a right-eye subtitle is sequentially updated in a predetermined number of frame periods in which a subtitle is displayed.

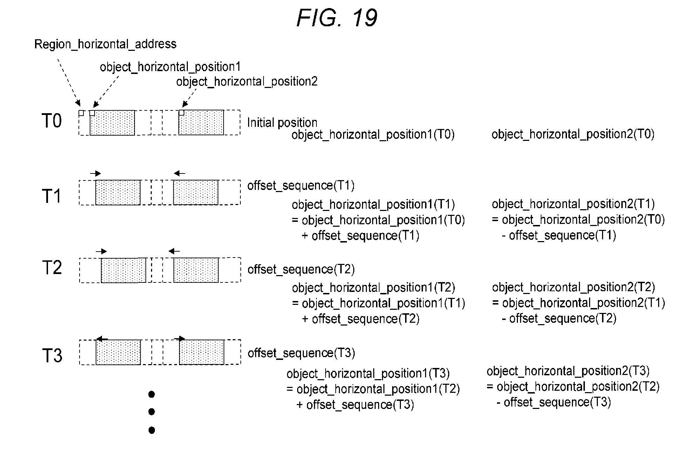

Fig. 19 illustrates an example of updating the object start position "object_horizontal_position" in units of frames. It is assumed that in the frame T0 (initial frame), the object start position of "Object_id = 1" is "object_horizontal_positionl(T0)", and the object start position of "Object_id = 2" is "object_horizontal_position2(T0)".

The object start position of a frame T1 which is the next fame is updated as follows. Here, an offset value of the frame T1 is assumed as "offset_sequence(T1)". In other words, the object start position "object_horizontal_position1(T1)" of "Object_id = 1" is "object_horizontal_position1(T0) + offset_sequence(T1)". Further, the object start position "object_horizontal_position2(T1)" of "Object_id = 2" is "object_horizontal_position2(T0) - offset_sequence(T1)".

Further, the object start position of a frame T2 which is the next fame is updated as follows. Here, an offset value of the frame T2 is assumed as "offset_sequence(T2)". In other words, the object start position "object_horizontal_position1(T2)" of "Object_id = 1" is "object_horizontal_position1(T1) + offset_sequence(T2)". Further, the object start position "object_horizontal_position2(T2)" of "Object_id = 2" is "object_horizontal_position2(T1) - offset_sequence(T2)". In the following, the object start position of each frame is obtained and updated in units of "Object_id" in the same way.

Further, for example, in the reception side, it is possible to bring disparity, which is based on a representative value of a predetermined number of frame periods such as a maximum value thereof or an average value thereof, to occur between the left-eye subtitle and the right-eye subtitle. In this case, in the reception side, a cumulative value of offset values of up to a corresponding frame is calculated in advance based on an offset value "offset_sequence(T)" of each frame. Then, in the reception side, cumulative values of frames, a maximum value "Max(offset_sequence(n))" or an average value "Ave(offset_sequence(n))" is added to an initial position of the frame T0(initial frame). As a result, disparity based on a maximum value or an average value of a predetermined number of frame periods is brought to occur between the left-eye subtitle and the right-eye subtitle in a predetermined number of frame periods in which a subtitle is displayed.

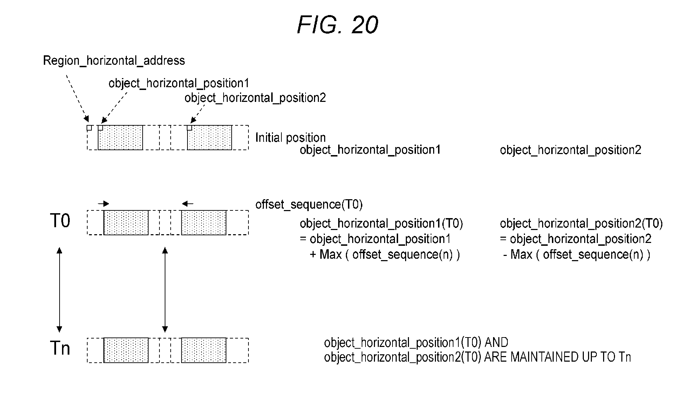

Fig. 20 illustrates an example in which the object start position "object_horizontal_position" is initially set to a maximum value "Max(offset_sequence(n))", and then the position is maintained. It is assumed that the initial position of the object start position of "Object_id = 1" is "object_horizontal_position1", and the initial position of the object start position of "Object_id = 2" is "object_horizontal_position2".

In a frame T0 (initial frame), the object start position is set as follows. In other words, the object start position "object_horizontal_position1(T0)" of "Object_id = 1" is set to "object_horizontal_position + Max(offset_sequence(n))". Further, the object start position "object_horizontal_position2(T0)" of "Object_id = 2" is set to "object_horizontal_position2 - Max(offset_sequence(n))". Then, in the subsequent frames, the object start positions of "Object_id = 1" and "Object_id = 2" are maintained.

### [Regarding Case B]

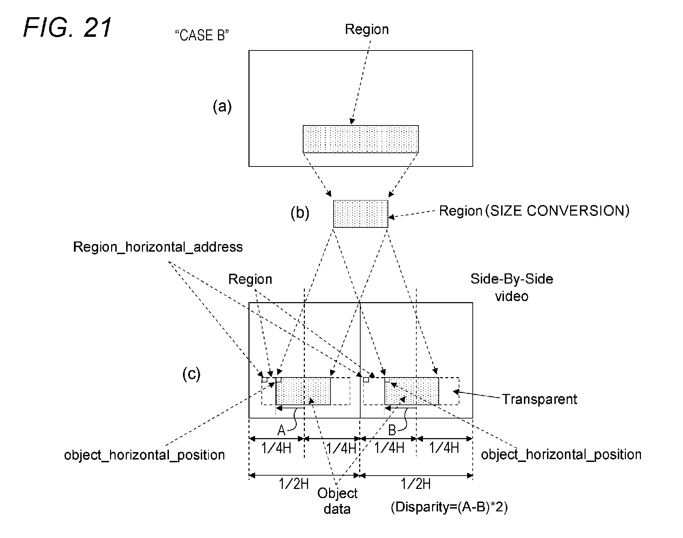

Fig. 21 conceptually illustrates a method of generating subtitle data for a stereoscopic image of the "case B". Here, a description will be made in connection with an example in which a transmission format of stereoscopic image data is the side-by-side format. Fig. 21(a) illustrates a region by 2D image subtitle data.

First, the subtitle processing unit 133 converts the size of a region by the 2D image subtitle data into the size appropriate for the side-by-side format as illustrated in Fig. 21(b), and then generates bitmap data of the converted size.

Next, the subtitle processing unit 133 sets bitmap data having the converted size as a component of each region of subtitle data for the stereoscopic image as illustrated in Fig. 21(c). At this time, the start position (object_horizontal_position) of an object of each region is set to a position which is shifted by a distance (A - B = disparity/2) corresponding to disparity between the left-eye image (left view) and the right-eye image (right view).

The subtitle processing unit 133 converts 2D image subtitle data into subtitle data for a stereoscopic image as described above, and generates segments such as the PCS, the RCS, and the ODS corresponding to the subtitle data for the stereoscopic image.

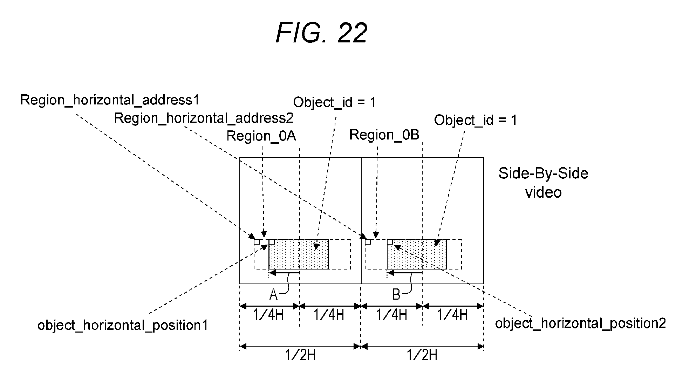

Fig. 22 illustrates an example of a region and an object by subtitle data for a stereoscopic image generated in the "case B". Here, the start position of the region at the left-eye image (left view) is "Region_horizontal_address1", the start position of the object is "object_horizontal_position1", and "Object_id = 1". Here, the start position of the region at the right-eye image (right view) is "Region_horizontal_address2," the start position of the object is "object_horizontal_position2", and "Object_id = 1". In this example, common bitmap data is used as bitmap data of the left-eye subtitle and the right-eye subtitle.

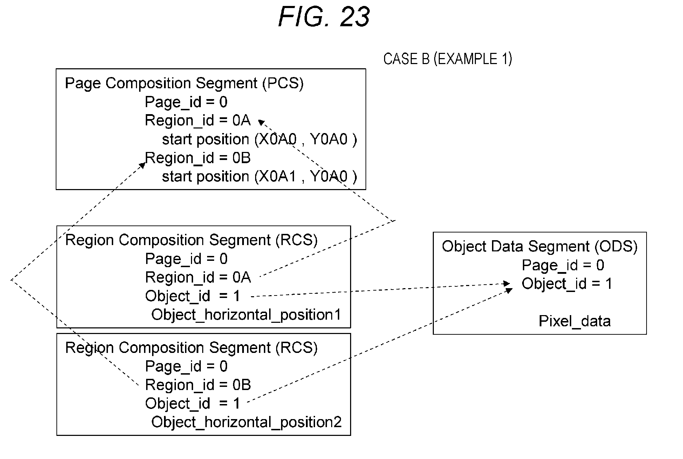

Fig. 23 illustrates a generation example (an example 1) of each segment in the "case B". In this generation example, the start positions (region_horizontal_address) of a region (Region_id = 0A) at a left-eye image (left view) side and a region (Region_id = 08) at a right-eye image (right view) side remains designated in the PCS (page composition segment). Further, in the RCS (region composition segment) of "Region_id = 0A", the ODS of "Object_id = 1" is referred to, and the start position "object_horizontal_position1" of the object remains designated. Further, in the RCS (region composition segment) of "Region_id = 0B", the ODS of "Object_id = 1" is referred to, and the start position "object_horizontal_position2" of the object remains designated.

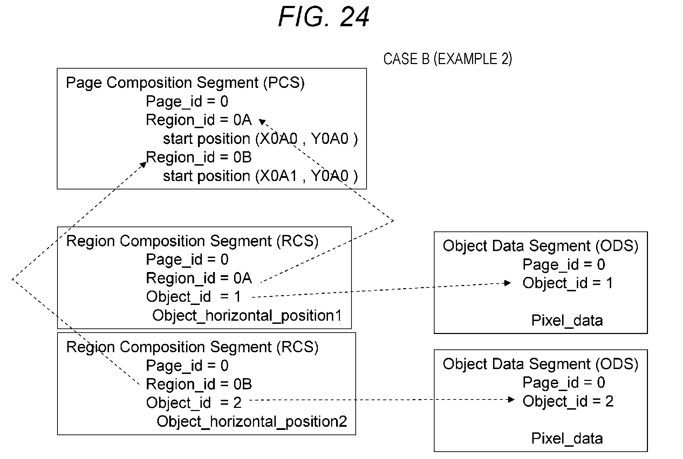

Fig. 24 illustrates a generation example (an example 2) of each segment in the "case B". In this generation example, different bitmap data can be used as bitmap data of the left-eye subtitle and the right-eye subtitle. In this generation example, the start positions (region_horizontal_address) of the region (Region_id = 0A) at the left-eye image (left view) side and the region (Region_id = 0B) at the right-eye image (right view) side remain designated in the PCS (page composition segment).

Further, in the RCS (region composition segment) of "Region_id = 0A", the ODS of "Object_id = 1" is referred to, and the start position "object_horizontal_position1" of the object remains designated. Further, in the RCS (region composition segment) of "Region_id = 0B", the ODS of "Object_id = 2" is referred to, and the start position "object_horizontal_position2" of the object remains designated.

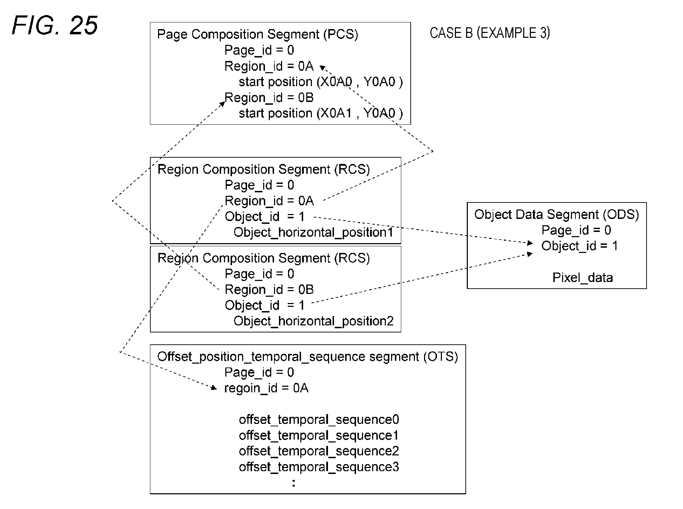

Fig. 25 illustrates a generation example (an example 3) of each segment in the "case B". In this generation example, not only the PCS, the RCS, and the ODS are generated similarly to the generation example (example 1) illustrated in Fig. 23, but also the OTS (offset_temporal_sequence_segment) is generated.

The disparity information group is included in the OTS. As described above, the disparity information group is information of disparity which is brought to occur between the left-eye subtitle and the right-eye subtitle in each frame of a predetermined number of frame periods in which a subtitle is displayed. Here, offset information on information of disparity of a previous frame is used as information of disparity of each frame configuring the disparity information group so as to suppress the amount of data. The structure of the OTS and the effect thereof are the same as described in the "case A", and so the redundant description thereof will not be repeated.

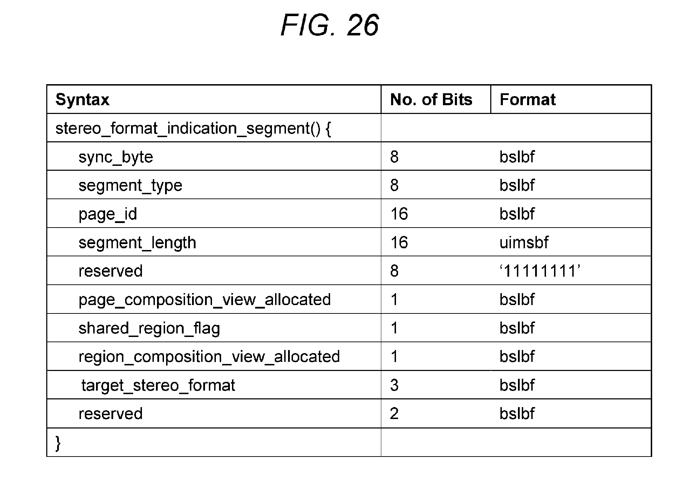

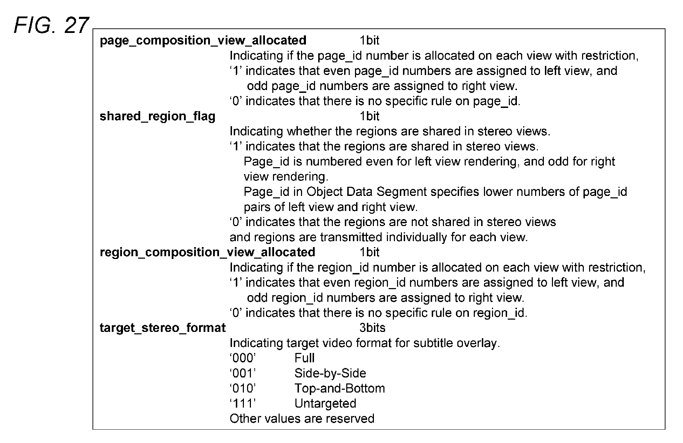

Further, in the "case B", the newly defined SFI (stereo_format_indication_segment) is also generated. The SFI designates 3D extension definition as described above. Fig. 26 illustrates an example of syntax of the SFI. Fig. 27 illustrates main data semantics of the SFI. In this syntax, information of "Sync_byte", "segment_type", "page_id", and "segment_length" are included. "segment_type" is 8-bit data representing the segment type, and "0 x 45" representing the SFI is herein used (see Fig. 10). "segment_length" is 8-bit data representing the length (size) of a segment. This data represents the number of bytes following "segment_length" as the length of a segment.

"page_composition_view_allocated" is 1-bit data representing whether or not a numerical value (an even number or an odd number) of a page ID "page_id" remains assigned to the left-eye image and the right-eye image. "page_composition_view_allocated = 1" represents "page_id" of an even number value remains assigned to the left-eye image (left view), and "page_id" of an odd number value remains assigned to the right-eye image (right view). Meanwhile, "page_composition_view_allocated = 0" represents that there is no specific rule on the page ID "page_id".

Further, "shared_region_flag" is 1-bit data representing whether an object is shared by regions of the left-eye image and the right-eye image. "shared_region_flag = 1" represents that an object is shared by the regions of the left-eye image and the right-eye image. Further, in the "case C", a numerical value of the page ID "page_id" has an even number in order to represent the left-eye image (left view) and has an odd number in order to represent the right-eye image (right view). The page ID "page_id" in the ODS which is commonly referred to is specified by a numerical value of a smaller one of a pair of page IDs "page_id" representing the left-eye image (left view) and the right-eye image (right view). Meanwhile, "shared_region_flag = 0" represents that an object is not shared by the regions of the left-eye image and the right-eye image.

Further, "region_composition_view_allocated" is 1-bit data representing whether or not a numerical value (an even number or an odd number) of a region ID "region_id" remains assigned to the left-eye image and the right-eye image. "region_composition_view_allocated = 1" represents "region_id" of an even number value remains assigned to the left-eye image (left view), and "region_id" of an odd number value remains assigned to the right-eye image (right view). Meanwhile, "region_composition_view_allocated = 0" represents that there is no specific rule on the region ID "region_id".

Further, "target_stereo_format" is 3-bit data representing image data which subtitle data targets. "000" represents stereoscopic image data of the full frame format or the backward compatible format. "001" represents stereoscopic image data of the side-by-side format. "010" represents stereoscopic image data of the top-and-bottom format. "111" represents 2D image data other than stereoscopic image data.

In the syntax of the SFI of Fig. 26, "region_composition_view_allocated", "shared_region_flag", and "target_stereo_format" related to the "case B". However, "page_composition_view_allocated," "shared_region_flag", and "target_stereo_format" relate to the "case C". Thus, in the "case B", "page_composition_view_allocated = 0" is set. Further, in the "case C", "region_composition_view_allocated = 0" is set.

### [Regarding Case C]

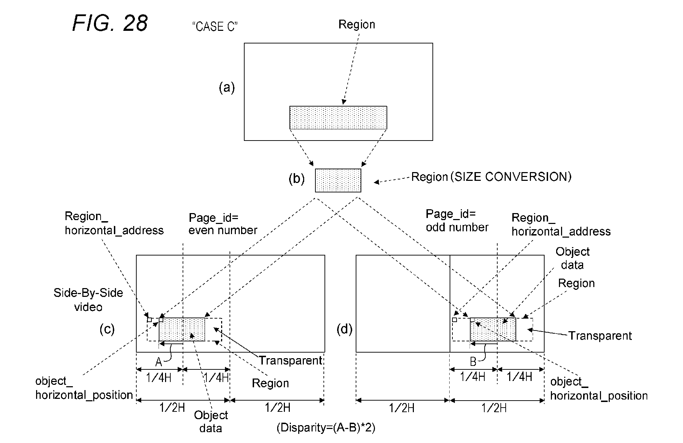

Fig. 28 conceptually illustrates a method of generating subtitle data for a stereoscopic image of the "case C". Here, a description will be made in connection with an example in which a transmission format of stereoscopic image data is the side-by-side format. Fig. 28(a) illustrates a region by 2D image subtitle data.

First, the subtitle processing unit 133 converts the size of a region by the 2D image subtitle data into the size appropriate for the side-by-side format as illustrated in Fig. 28(b), and then generates bitmap data of the converted size.

Next, the subtitle processing unit 133 sets bitmap data having the converted size as a component of a region of each page of subtitle data for a stereoscopic image as illustrated in Figs. 28(c) and 28(d). At this time, the start position (region_horizontal_address) of each object is set to a position which is shifted by a distance (A - B = disparity/2) corresponding to disparity between a left-eye image (left view) and a right-eye image (right view).

The subtitle processing unit 133 converts 2D image subtitle data into subtitle data for a stereoscopic image as described above, and generates segments such as the PCS, the RCS, and the ODS corresponding to the subtitle data for the stereoscopic image.

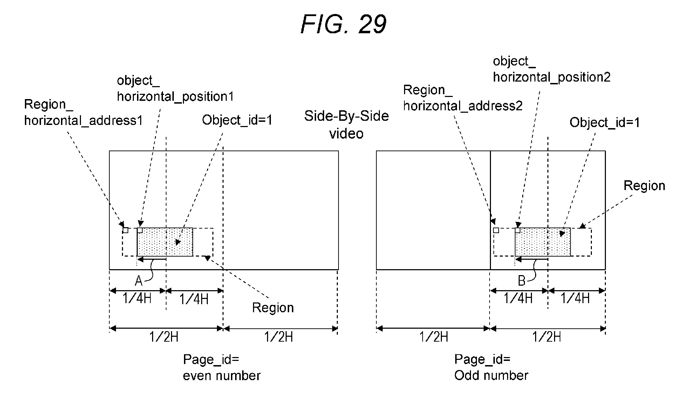

Fig. 29 illustrates an example of a region and an object by subtitle data for a stereoscopic image generated in the "case C". Here, the start position of a region of a page (Page_id = even number) at the left-eye image (left view) is "Region_horizontal_address1". The start position of the object is "object_horizontal_positionl", and "Object_id = 1". Further, the start position of a region of a page (Page_id = odd number) at the right-eye image (right view) is "Region_horizontal_address2". The start position of the object is "object_horizontal_position2", and "Object_id = 1". In this example, common bitmap data is used as bitmap data of the left-eye subtitle and the right-eye subtitle.

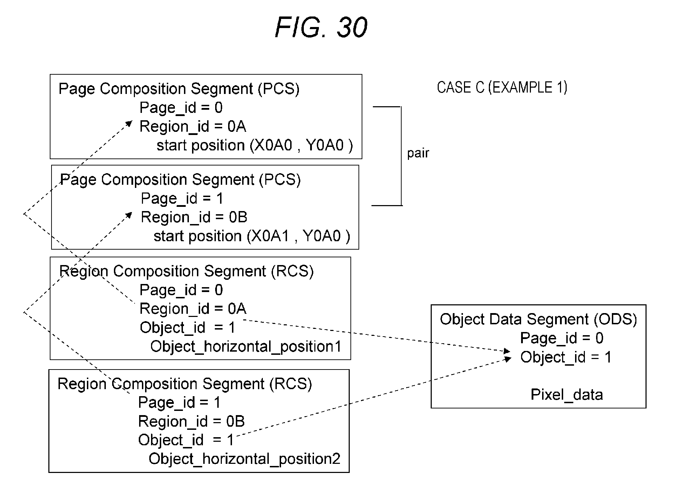

Fig. 30 illustrates a generation example (an example 1) of each segment in the "case C". In this generation example, in the PCS (page composition segment) at a left-eye image (left view) side, the start position (region_horizontal_address1) of a region (Region_id = 0A) remains designated. Further, in the RCS (region composition segment) of "Region_id = 0A", the ODS of "Object_id = 1" is referred to, and the start position "object_horizontal_position1" of the object remains designated.

Further, in this generation example, in the PCS (page composition segment) at the right-eye image (right view), the start position (region_horizontal_address2) of a region (Region_id = 0B) remains designated. Further, in the RCS (region composition segment) of "Region_id = 0B", the ODS of "Object_id = 1" is referred to, and the start position "object_horizontal_position2" of the object remains designated.

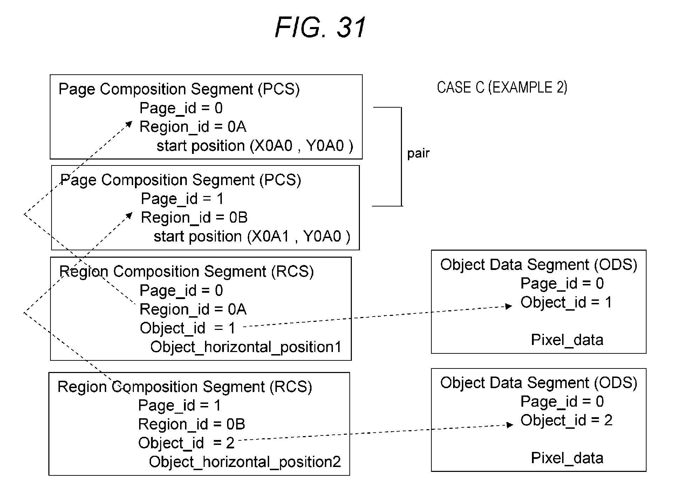

Fig. 31 illustrates a generation example (an example 2) of each segment in the "case C". In this generation example, different bitmap data can be used as bitmap data of the left-eye subtitle and the right-eye subtitle. In this generation example, in the PCS (page composition segment) at the left-eye image (left view), the start position (region_horizontal_address1) of a region (Region_id = 0A) remains designated. Further, in the RCS (region composition segment) of "Region_id = 0A", the ODS of "Object_id = 1" is referred to, and the start position "object_horizontal_position1" of the object remains designated.

Further, in this generation example, in the PCS (page composition segment) at the right-eye image (right view), the start position (region_horizontal_address2) of a region (Region_id = 0B) remains designated. Further, in the RCS (region composition segment) of "Region_id = 0B", the ODS of "Object_id = 2" is referred to, and the start position "object_horizontal_position2" of the object remains designated.

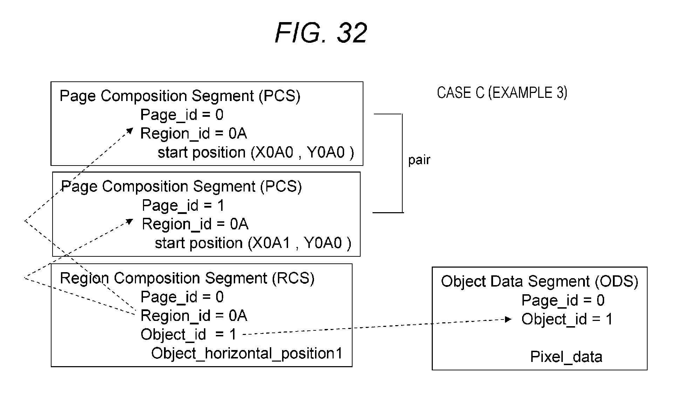

Fig. 32 illustrates a generation example (an example 3) of each segment in the "case C". In this generation example, a common RCS is referred to in PCSs at a left-eye image (left view) side and a right-eye image (right view). In this generation example, in the PCS (page composition segment) at the left-eye image (left view) side, an RCS of a region (Region_id = 0A) is referred to, and the start position (region_horizontal_address1) remains designated. Further, in the PCS (page composition segment) at the right-eye image (right view) side, the RCS of the region (Region_id = 0A) is referred to, and the start position (region_horizontal_address2) remains designated. Further, in the RCS (region composition segment) of "Region_id = 0A", the ODS of "Object_id = 1" is referred to, and the start position "object_horizontal_position1" of the object remains designated.

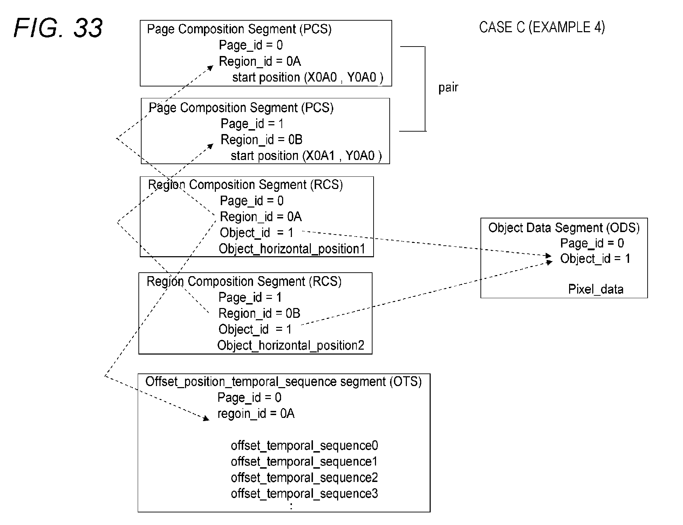

Fig. 33 illustrates a generation example (an example 4) of each segment in the "case C". In this generation example, not only the PCS, the RCS, and the ODS are generated similarly to the generation example (example 1) illustrated in Fig. 30, but also the OTS (offset_temporal_sequence_segment) is generated.

The disparity information group is included in the segment of the OTS. As described above, the disparity information group refers to information of disparity which is brought to occur between the left-eye subtitle and the right-eye subtitle in each frame of a predetermined number of frame periods in which a subtitle is displayed. Here, offset information on information of disparity of a previous frame is used as information of disparity of each frame configuring the disparity information group so as to suppress the amount of data. The structure of the OTS and the effect thereof are the same as described in the "case A", and so the redundant description thereof will not be repeated.

Further, in the "case C", the newly defined SFI (stereo_format_indication_segment) is also generated. The SFI designates 3D extension definition and includes information such as "page_composition_view_allocated", "region_composition_view_allocated", "shared_region_flag", and "target_stereo_format". The structure of the SFI is the same as described in the "case B", and so the redundant description thereof will not be repeated. As described above, since "region_composition_view_allocated" relates only to the "case B", "region_composition_view_allocated = 0" is herein regarded.

### [Regarding Case D]

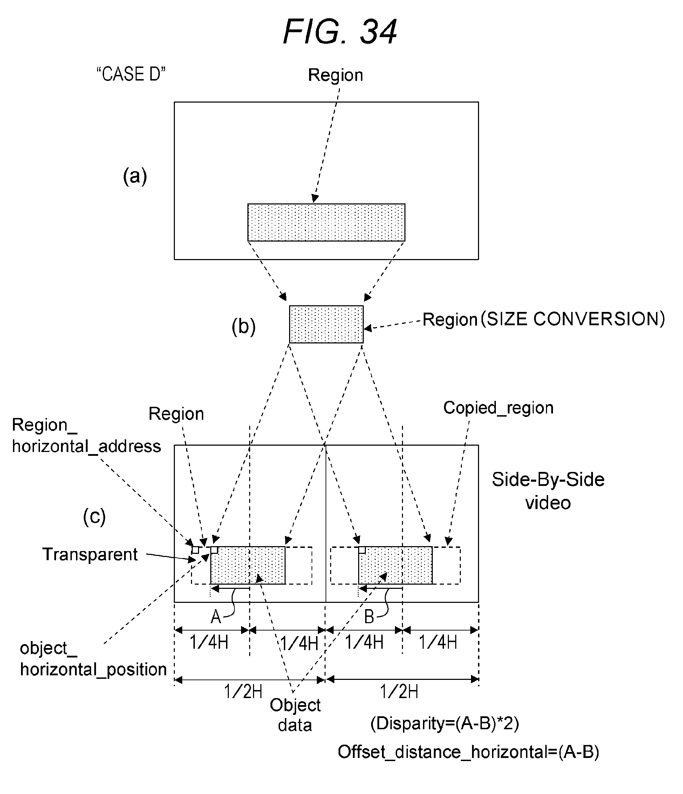

Fig. 34 conceptually illustrates a method of generating subtitle data for a stereoscopic image of the "case D". Here, a description will be made in connection with an example in which a transmission format of stereoscopic image data is the side-by-side format. Fig. 34(a) illustrates a region by 2D image subtitle data.

First, the subtitle processing unit 133 converts the size of a region by the 2D image subtitle data into the size appropriate for the side-by-side format as illustrated in Fig. 34(b), and then generates bitmap data of the converted size.

Next, the subtitle processing unit 133 sets bitmap data having the converted size as components of a region at a left-eye image (left view) and a copied region (Copied_region) at a right-eye image (right view) as illustrated in Fig. 34(c). At this time, the start position (object_horizontal_position) of an object of each region is set to a position which is shifted by a distance (A - B = disparity/2) corresponding to disparity between a left-eye image (left view) and a right-eye image (right view).

The subtitle processing unit 133 converts 2D image subtitle data into subtitle data for a stereoscopic image as described above, and generates segments such as the PCS, the RCS, and the ODS corresponding to the subtitle data for the stereoscopic image.

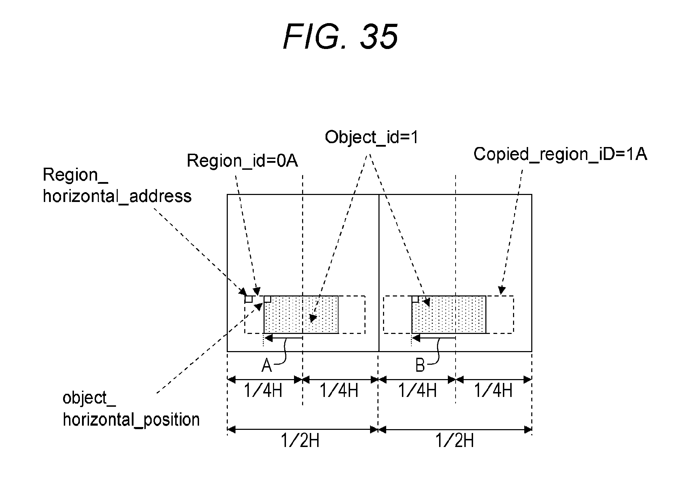

Fig. 35 illustrates an example of a region and an object by subtitle data for a stereoscopic image generated in the "case D". Here, the start position of a region at the left-eye image (left view) side is "Region_horizontal_address", the start position of an object is "object_horizontal_position", and "Object_id = 1". Here, the start position of a copied region (copied_region) at the right-eye image (right view) side is shifted by (A - B = disparity/2) from the start position of the object at the left-eye image (left view) side. For this reason, in an RCP (region_copy_segment) which will be described later, "Offset_distance_horizontal = (A - B)" is set.

In the "case D", as illustrated in Fig. 12, not only the PCS, the RCS, and the ODS are generated, but also the RCP (region_copy_segment) and the OTS offset_temporal_sequence_segment) are generated. The structure of the OTS and the effect thereof are the same as described in the "case A", and so the redundant description thereof will not be repeated.

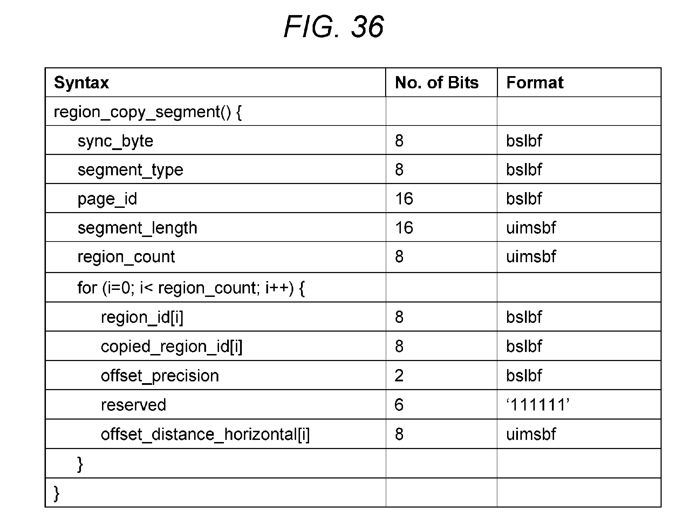

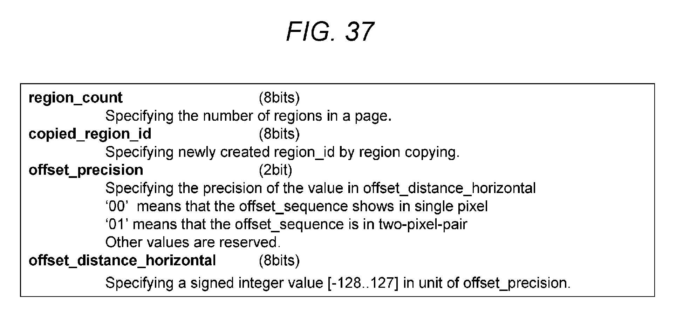

The RCP (region_copy_segment) designates the position of the copy destination of the region as described above. Fig. 36 illustrates syntax of the RCP (region_copy_segment). Fig. 37 illustrates main data semantics of the RCP. In this syntax, information of "sync_byte", "segment_type", "page_id", and "segment_length" are included. "segment_type" is 8-bit data representing the segment type, and "0 x 47" representing the RCP is herein used (see Fig. 10). "segment_length" is 8-bit data representing the length (size) of a segment. This data represents the number of bytes following "segment_length" as the length of a segment.

"region_count" is 8-bit data representing the number of regions in a page. "copied_region_id" is 8-bit data representing an ID of a copied region (copied_region) generated by copying a region.

"offset_precision" is 1-bit information representing the precision of "1" in an offset value represented by "offset_distance_horizontal", that is, the number of pixels "1". "offset_precision = 0" represents that "1" in the offset value is in one pixel. "offset_precision = 1" represents that "1" in the offset value is in two pixels. "offset_distance_horizontal" is 8-bit data representing disparity (A - B) to occur between an object at a left-eye image (left view) side and a copied object at a right-eye image (right view) side. "offset_distance_horizontal" has a value in a range of -128 to 127.

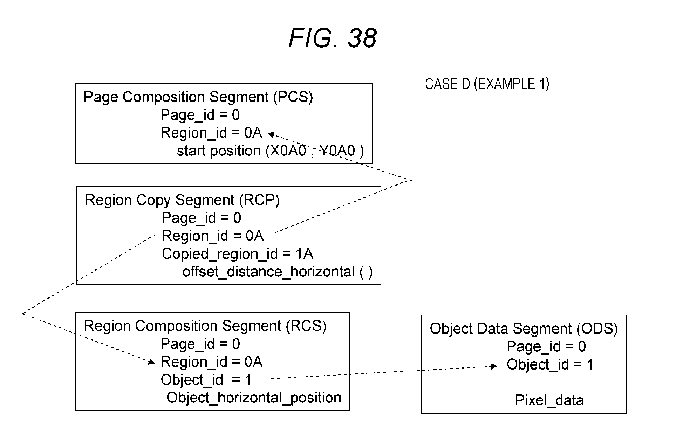

Fig. 38 illustrates a generation example (an example 1) of each segment in the "case D". In this generation example, in the PCS (page composition segment), the start position (region_horizontal_address) of a region (Region_id = 0A) at a left-eye image (left view) side remains designated. Further, in the RCS (region composition segment) of "Region_id = 0A", the ODS of "Object_id = 1" is referred to, and the start position "object_horizontal_position" of the object remains designated.

Further, in the RCP (region_copy_segment), a region of "Region_id = 0A" is referred to, and it is represented that the region is copied. Further, in the RCP, "copied_region_id" is defined, and information of "offset_distance_horizontal" is included.

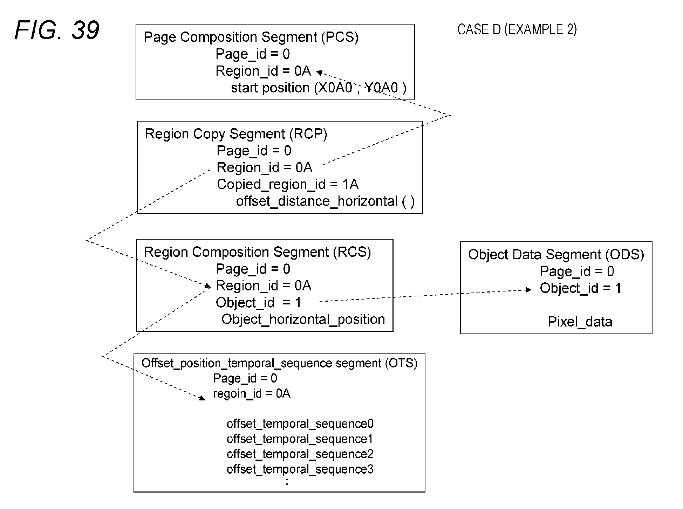

Fig. 39 illustrates a generation example (an example 2) of each segment in the "case D". In this generation example, not only the PCS, the RCS, the ODS, and the RCP are generated similarly to the generation example (example 1) illustrated in Fig. 38, but also the OTS (offset_temporal_sequence_segment) is generated. The structure of the OTS and the effect thereof are the same as described in the "case A", and so the redundant description thereof will not be repeated.

### [Regarding Case E]

In the "case E", as illustrated in Fig. 12, not only the PCS, the RCS, and the ODS are generated, but also the OSS (offset_sequence_segment) is generated.

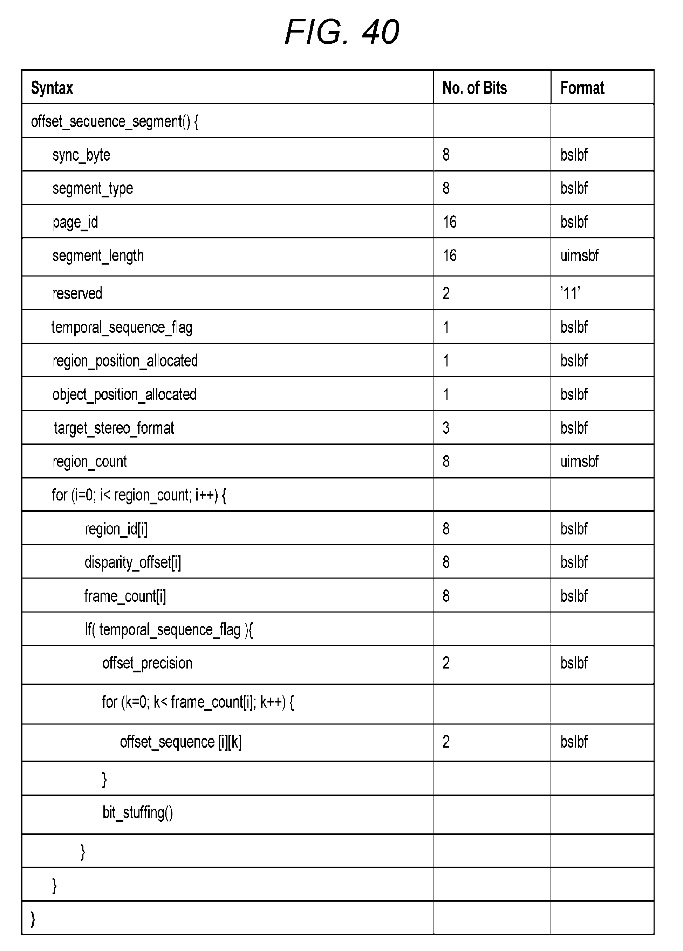

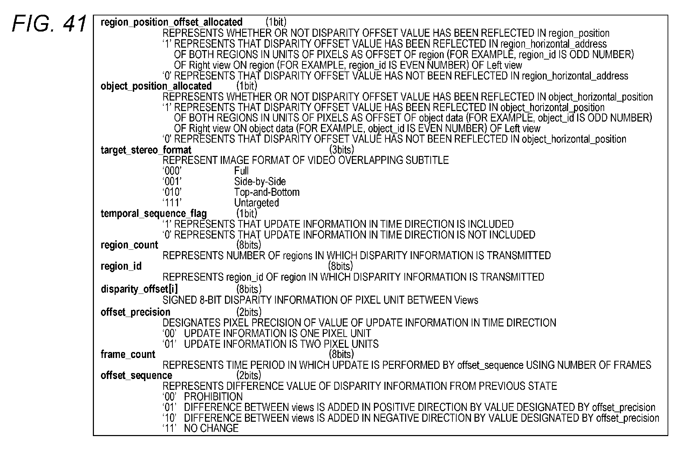

The OSS (offset_sequence_segment) designates setting information of 3D extension and control of a disparity offset as described above. Fig. 40 illustrates an example of syntax of the OSS. Fig. 41 illustrates main data semantics of the OSS. In this syntax, information of "sync_byte", "segment_type", "page_id", and "segment_length" are included. "segment_type" is 8-bit data representing the segment type, and "0x44" representing the RCP is herein used (see Fig. 10). "segment_length" is 8-bit data representing the length (size) of a segment. This data represents the number of bytes following "segment_length" as the length of a segment.

"region_position_offset_allocated" is 1-bit data representing whether or not a disparity offset value has been reflected in "region_position". "region_position_offset_allocated = 1" represents that the disparity offset value has been reflected in "region_position". In this case, the disparity offset value has been reflected in "region_horizontal_address" of both regions in units of pixels as an offset of a region of a right-eye image (right view) to a region of a left-eye image (left view). For example, "region_id" of the region of the left-eye image (left view) has an even number, and "region_id" of the region of the right-eye image (right view) has an odd number. However, "region_position_offset_allocated = 0" represents that the disparity offset value has not been reflected in "region_position".

"object_position_allocated" is 1-bit data representing whether or not the disparity offset value has been reflected in "object_horizontal_position". "object_position_allocated = 1" represents that the disparity offset value has been reflected in "object_horizontal_position". In this case, the disparity offset value has been reflected in "object_horizontal_position" of both objects in units of pixels as an offset of an object of a right-eye image (right view) to an object of a left-eye image (left view). However, "object_position_allocated = 0" represents that the disparity offset value has not been reflected in "object_horizontal_position".

Further, "target_stereo_format" is 3-bit data representing image data which subtitle data targets. "000" represents stereoscopic image data of the full frame format or the backward compatible format. "001" represents stereoscopic image data of the side-by-side format. "010" represents stereoscopic image data of the top-and-bottom format. "111" represents that a specific stereoscopic image is not a target, but general image data including a 2D image of the conventional art is a target.

"Temporal_sequence_flag" is 1-bit data representing whether or not update information in a time direction is included. "Temporal_sequence_flag = 1" represents that update information in a time direction is included. "Temporal_sequence_flag = 0" represents that update information in a time direction is not included. "region_count" is 8-bit data representing the number of regions in which disparity information is transmitted. "region_id" represents an ID of a region in which the disparity information is transmitted. "Disparity_offset" is signed 8-bit disparity information of a pixel unit between the left-eye subtitle and the right-eye subtitle. In the OSS, "region_id" is discriminated corresponding to the number of regions, and "Disparity_offset" is included.

Further, in the OSS, in case of "Temporal_sequence_flag = 1", "region_id" is discriminated corresponding to the number of regions, and the disparity information group of each region is included. "frame_count" represents the number of frames in which offset_sequence is supplied during a display frame period.

"offset_sequence" represents a difference value of disparity information from a previous state and is 2-bit information as offset information on disparity information of a previous frame. "offset_sequence = 01" represents that an offset value is "+1". "offset_sequence = 10" represents that an offset value is "-1". Further, "offset_sequence = 11" represents that an offset value does not change from a previous frame. "offset_precision" is 1-bit information for designating the pixel precision of a value of update information in a time direction. In other words, "offset_precision" represents the precision of "1" in the offset value represented by "offset_sequence", that is, the number of pixels represented by "1". "offset_precision = 0" represents that "1" in the offset value is in one pixel. "offset_precision = 1" represents that "1" in the offset value is in two pixels.

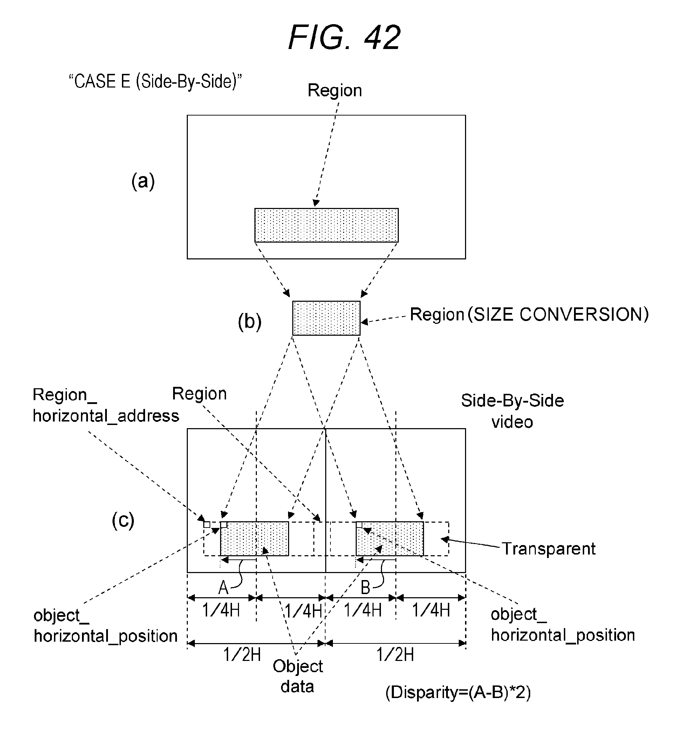

Fig. 42 conceptually illustrates a method of generating subtitle data for a stereoscopic image of the "case E (side-by-side)". In this case, left-eye subtitle data and right-eye subtitle data are generated as data of different objects of the same region. Fig. 42(a) illustrates a region by 2D image subtitle data.

First, the subtitle processing unit 133 converts the size of a region by the 2D image subtitle data into the size appropriate for the side-by-side format as illustrated in Fig. 42(b), and then generates bitmap data of the converted size.

Next, the subtitle processing unit 133 sets bitmap data having the converted size as a component of a region of subtitle data for a stereoscopic image as illustrated in Fig. 42(c). At this time, the start position (region_horizontal_address) of each object is set to a position which is shifted, from a reference position of each of a left-eye image and a right-eye image which is a target image, by a distance (A - B = disparity/2) corresponding to disparity between a left-eye image (left view) and a right-eye image (right view) or (A - B = disparity).

The subtitle processing unit 133 converts 2D image subtitle data into subtitle data for a stereoscopic image as described above, and generates segments such as the PCS, the RCS, and the ODS corresponding to the subtitle data for the stereoscopic image.

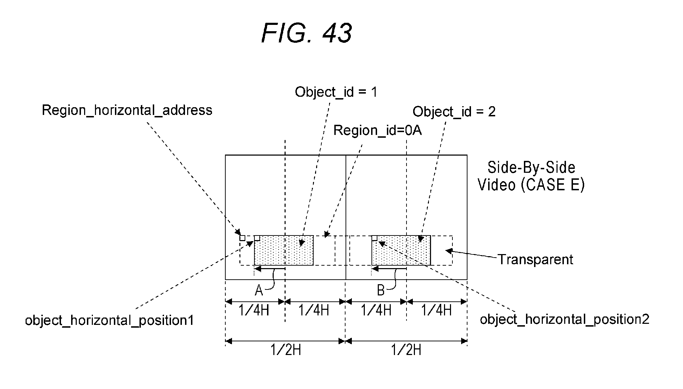

Fig. 43 illustrates an example of a region and an object by subtitle data for a stereoscopic image generated in the "case E (side-by-side)". Here, the start position of a region is "Region_horizontal_address". For an object at a left-eye image (left view) side, the start position is "object_horizontal_position1", and "Object_id = 1". Further, for an object at a right-eye image (right view) side, the start position is "object_horizontal_position2", and "Object_id = 2". Further, "Object_id = 2" may be changed to Object_id = 1, and the same object data may be shared between the left-eye image and the right-eye image, so that the left-eye image and the right-eye image can be different in only object_horizontal_position from each other.

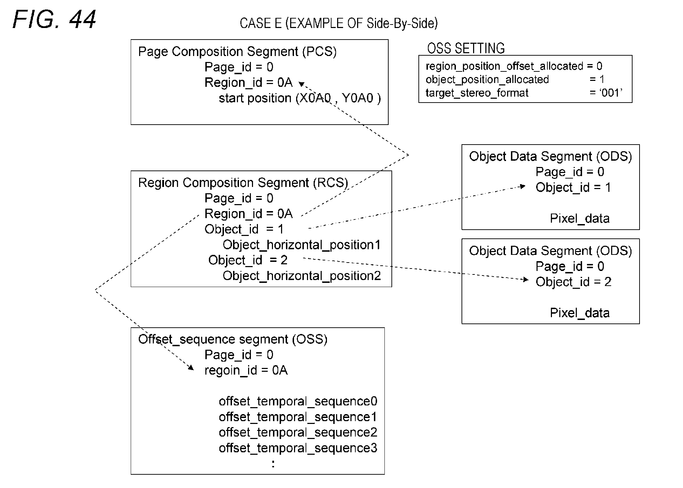

Fig. 44 illustrates a generation example of each segment in the "case E (side-by-side)". In this case, in the OSS, "region_position_offset_allocated = 0", "object_position_allocated = 1", and "target_stereo_format = 001" remain set. In this generation example, in the PCS (page composition segment), the start position (region_horizontal_address) of the region (Region_id = 0A) remains designated. Further, in the RCS (region composition segment) of "Region_id = 0A", the ODS of "Object_id = 1" is referred to, and the start position "object_horizontal_position1" of the object remains designated. Further, in the RCS (region composition segment) of "Region_id = 0A", the ODS of "Object_id = 2" is referred to, and the start position "object_horizontal_position2" of the object remains designated. Further, in this generation example, in the OSS (offset_sequence_segment), "Region_id = 0A" remains set.

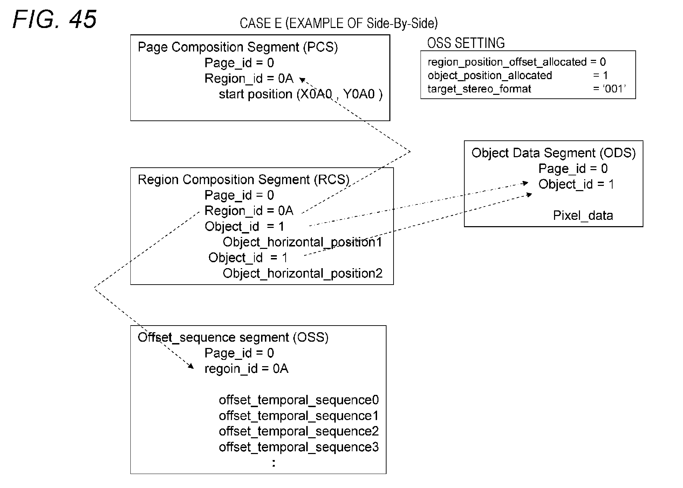

Fig. 45 also illustrates a generation example of each segment in the "case E (side-by-side)". In this case, in the OSS, "region_position offset allocated = 0", "object_position_allocated = 1", and "target_stereo_format = 001" remain set. In this generation example, in the PCS (page composition segment), the start position (region_horizontal_address) of a region (Region_id = 0A) remains designated. Further, in the RCS (region composition segment) of "Region_id = 0A", the ODS of "Object_id = 1" is referred to, and the start position "object_horizontal_position1" of the object remains designated. Further, in the RCS (region composition segment) of "Region_id = 0A", the ODS of "Object_id = 1" is referred to, and the start position "object_horizontal_position2" of the object remains designated. Further, in this generation example, in the OSS (offset_sequence_segment), "Region_id = 0A" remains set.

As described above, the disparity information group (offset value "offset_sequence") is included in the OSS. As described above, the disparity information group is information of disparity which is brought to occur between the left-eye subtitle and the right-eye subtitle in each frame of a predetermined number of frame periods in which a subtitle is displayed. In the reception side, it is possible to bring predetermined disparity to occur between the left-eye subtitle and the right-eye subtitle based on an offset value "offset_sequence" in each frame of a predetermined number of frame periods. For example, in the reception side, it is possible to sequentially update disparity between the left-eye subtitle and the right-eye subtitle.

In this case, the reception side maintains backward compatibility and can simply update the object start position "object_horizontal_position" in units of frames. In other words, "object_horizontal_position" is updated in units of "Object_id" such that a difference amount designated by "offset_sequence(T)" is added to an initial position of a frame T0 (initial frame) in each frame. As a result, disparity between a left-eye subtitle and a right-eye subtitle is sequentially updated in a predetermined number of frame periods in which a subtitle is displayed.

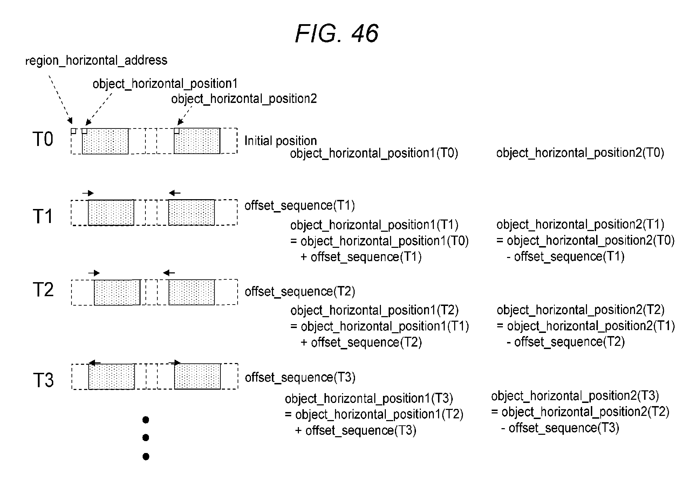

Fig. 46 illustrates an example of updating the object start position "object_horizontal_position" in units of frames. It is assumed that in the frame T0 (initial frame), the object start position of "Object_id = 1" is "object_horizontal_position1(T0)", and the object start position of "Object_id = 2" is "object_horizontal_position2(T0)".

The object start position of a frame T1 which is the next fame is updated as follows. Here, an offset value of the frame T1 is assumed as "offset_sequence(T1)". In other words, the object start position "object_horizontal_position1(T1)" of "Object_id = 1" is "object_horizontal_position1(T0) + offset_sequence(T1)". Further, the object start position "object_horizontal_position2(T1)" of "Object_id = 2" is "object_horizontal_position2(T0) - offset_sequence(T1)".

Further, the object start position of a frame T2 which is the next fame is updated as follows. Here, an offset value of the frame T2 is assumed as "offset_sequence(T2)". In other words, the object start position "object_horizontal_position1(T2)" of "Object_id = 1" is "object_horizontal_position1(T1) + offset_sequence(T2)". Further, the object start position "object_horizontal_position2(T2)" of "Object_id = 2" is "object_horizontal_position2(T1) - offset_sequence(T2)". In the following, the object start position of each frame is obtained and updated in units of objects in the same way.

Further, for example, in the reception side, it is possible to bring disparity, which is based on a representative value of a predetermined number of frame periods such as a maximum value thereof or an average value thereof, to occur between the left-eye subtitle and the right-eye subtitle. In this case, in the reception side, a cumulative value of offset values of up to a corresponding frame is calculated in advance based on an offset value "offset_sequence(T)" of each frame. Then, in the reception side, of cumulative values of frames, a maximum value "Max(offset_sequence(n))" or an average value "Ave(offset_sequence(n))" is added to an initial position of the frame T0(initial frame). As a result, disparity based on a maximum value or an average value of a predetermined number of frame periods is brought to occur between the left-eye subtitle and the right-eye subtitle in a predetermined number of frame periods in which a subtitle is displayed.

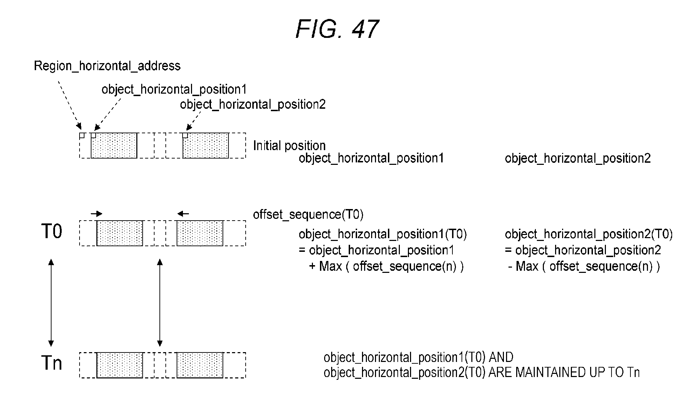

Fig. 47 illustrates an example in which the object start position "object_horizontal_position" is initially set to a maximum value "Max(offset_sequence(n))", and then the position is maintained. It is assumed that the initial position of the object start position of "Object_id = 1" is "object_horizontal_position1", and the initial position of the object start position of "Object_id = 2" is "object_horizontal_position2".

In a frame T0 (initial frame), the object start position is set as follows. In other words, the object start position "object_horizontal_position1(T0)" of "Object_id = 1" is set to "object_horizontal_position + Max(offset_sequence(n))". Further, the object start position "object_horizontal_position2(T0)" of "Object_id = 2" is set to "object_horizontal_position2 - Max(offset_sequence(n))". Then, in the subsequent frames, the object start positions of "Object_id = 1" and "Object_id = 2" are maintained.

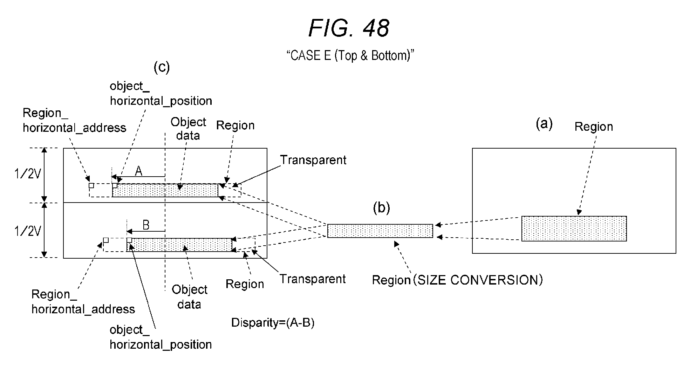

Fig. 48 conceptually illustrates a method of generating subtitle data for a stereoscopic image of the "case E (top-and-bottom)". In this case, left-eye subtitle data and right-eye subtitle data are generated as data of different regions of the same page. Fig. 48(a) illustrates a region by 2D image subtitle data.

First, the subtitle processing unit 133 converts the size of a region by the 2D image subtitle data into the size appropriate for the top-and-bottom format as illustrated in Fig. 48(b), and then generates bitmap data of the converted size.

Next, the subtitle processing unit 133 sets bitmap data having the converted size as a component of a region of subtitle data for the stereoscopic image as illustrated in Fig. 48(c). At this time, the start position (region_horizontal_address) of each object is set to a position which is shifted by a distance (A - B = disparity) corresponding to disparity between the left-eye image (left view) and the right-eye image (right view).

The subtitle processing unit 133 converts 2D image subtitle data into subtitle data for a stereoscopic image as described above, and generates segments such as the PCS, the RCS, and the ODS corresponding to the subtitle data for the stereoscopic image.

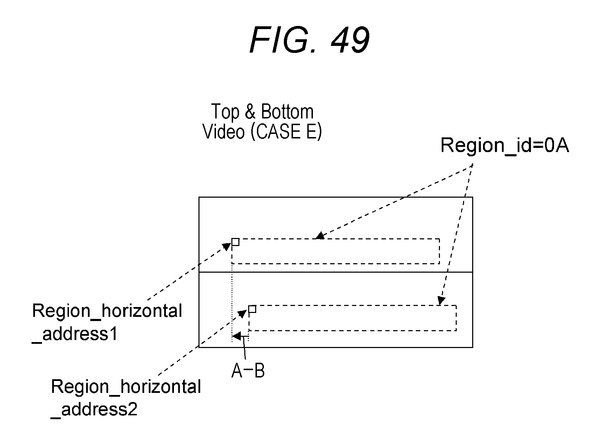

Fig. 49 illustrates an example of a region by subtitle data for a stereoscopic image generated in the "case E (top-and-bottom)". Here, the start position of the region at the left-eye image (left view) side is "Region_horizontal_address1", and the start position of the region at the right-eye image (right view) side is "Region_horizontal_address2". In this example, common bitmap data is used as bitmap data of the left-eye subtitle and the right-eye subtitle.

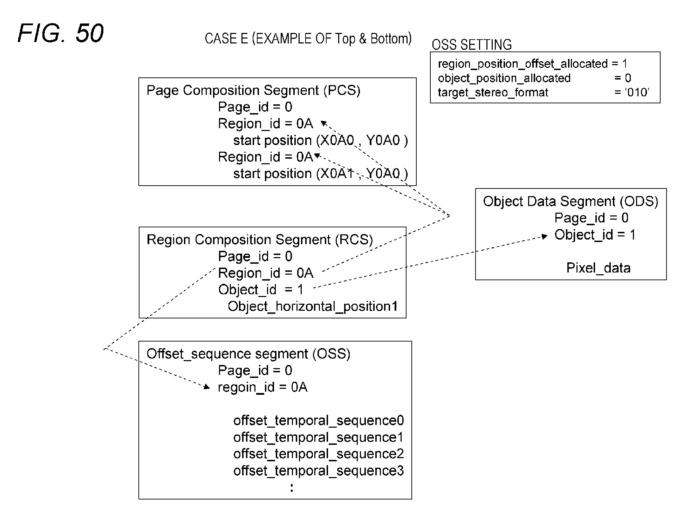

Fig. 50 illustrates a generation example of each segment in the "case E (top-and-bottom)". In this case, in the OSS, "region_position_offset_allocated = 1", "object_position_allocated = 0", and "target_stereo_format =010" remain set.

In this generation example, in the PCS (page composition segment), the start positions (region_horizontal_address) of the region (Region_id = 0A) at the left-eye image (left view) side and the region (Region_id = 0A) at the right-eye image (right view) side remain designated. Further, in the RCS (region composition segment) of "Region_id = 0A", the ODS of "Object_id = 1" is referred to, and the start position "object_horizontal_position1" of the object remains designated. Further, in this generation example, in the OSS (offset_sequence_segment), "Region_id = 0A" remains set.

As described above, the disparity information group (offset value "offset_sequence") is included in the OSS. In the reception side, it is possible to bring predetermined disparity to occur between the left-eye subtitle and the right-eye subtitle based on an offset value "offset_sequence" in each frame of a predetermined number of frame periods. For example, in the reception side, it is possible to sequentially update disparity between the left-eye subtitle and the right-eye subtitle.

In this case, the reception side maintains backward compatibility and can simply update the region start position "region_horizontal_address" in units of frames. In other words, "region_horizontal_address" is updated in units of "Region_id" such that a difference amount designated by "offset_sequence(T)" is added to an initial position of a frame T0 (an initial frame) in each frame. As a result, disparity between a left-eye subtitle and a right-eye subtitle is sequentially updated in a predetermined number of frame periods in which a subtitle is displayed.

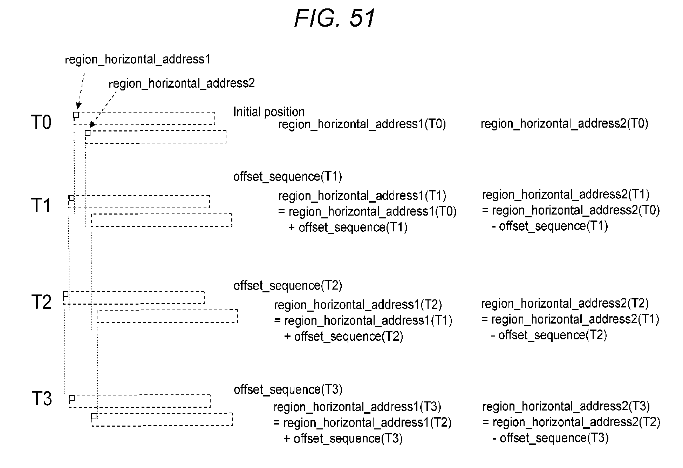

Fig. 51 illustrates an example of updating the region start position "region_horizontal_address" in units of frames. In the frame T0 (initial frame), the region start position at the left-eye image (left view) side is "region_horizontal_address1(T0)", and the region start position at the right-eye image (right view) side is "regionhorizontal_address2(T0)".

The object start position of a frame T1 which is the next fame is updated as follows. Here, an offset value of the frame T1 is assumed as "offset_sequence(T1)". In other words, the region start position "region_horizontal_addressl(T1)" at the left-eye image (left view) side is "region_horizontal_address1(T0) + offset_sequence(T1)". Further, the region start position "region_horizontal_address2(T1)" at the right-eye image (right view) side is "region_horizontal_address2(T0) - offset_sequence(T1)".

Further, the region start position of a frame T2 which is the next fame is updated as follows. Here, an offset value of the frame T2 is assumed as "offset_sequence(T2)". In other words, the region start position "region_horizontal_address1(T2)" at the left-eye image (left view) side is "region_horizontal_address1(T1) + offset_sequence(T2)". Further, the region start position "region_horizontal_address2(T2)" at the right-eye image (right view) side is "region_horizontal_address2(T1) - offset_sequence(T2)". In the following, the region start position of each frame is obtained and updated in units of regions in the same way.

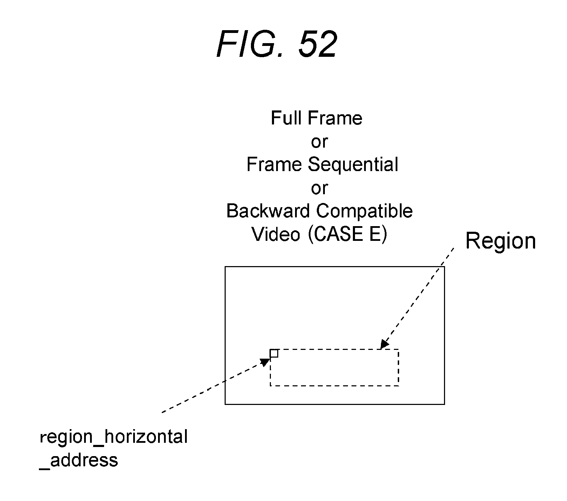

Fig. 52 illustrates an example of a region by subtitle data for a stereoscopic image generated in the "case E (full frame, frame sequential, or backward compatible)". Here, the start position of the region is "Region_horizontal_address". In this format, disparity which is brought to occur between the left-eye subtitle and the right-eye subtitle is not reflected in the start position of the region of the left-eye image (left view) and the right-eye image (right view), and the disparity is separately transmitted through the OSS as "Disparity_offset".

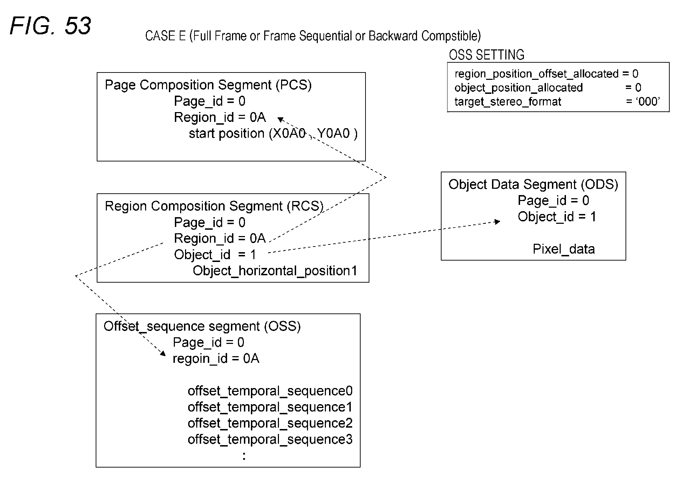

Fig. 53 illustrates a generation example of each segment in the "case E (full frame, frame sequential, or backward compatible)". In this case, in the OSS, "region_position_offset_allocated = 0", "object_position_allocated = 0", and "target_stereo_format = 000" remain set. In this generation example, in the PCS (page composition segment), the start position (region_horizontal_address) of the region (Region_id = 0A) remains set.

Further, in the RCS (region composition segment) of "Region_id = 0A", the ODS of "Object_id = 1" is referred to, and the start position "object_horizontal_position1" of the object remains designated. Further, in this generation example, in the OSS (offset_sequence_segment), "Region_id = 0A" remains set.

As described above, the disparity information group (offset value "offset_sequence") is included in the OSS. As described above, the disparity information group is information of disparity which is brought to occur between the left-eye subtitle and the right-eye subtitle in each frame of a predetermined number of frame periods in which a subtitle is displayed. In the reception side, it is possible to bring predetermined disparity to occur between the left-eye subtitle and the right-eye subtitle based on an offset value "offset_sequence" in each frame of a predetermined number of frame periods. For example, in the reception side, it is possible to sequentially update disparity between the left-eye subtitle and the right-eye subtitle.

In this case, the reception side maintains backward compatibility and can simply update the region start position "region_horizontal_address" in units of frames. In other words, "region_horizontal_address" is updated in units of "region_id" such that a difference amount designated by "offset_sequence(T)" is added to an initial position of a frame T0 (an initial frame) in each frame. As a result, disparity between a left-eye subtitle and a right-eye subtitle is sequentially updated in a predetermined number of frame periods in which a subtitle is displayed.

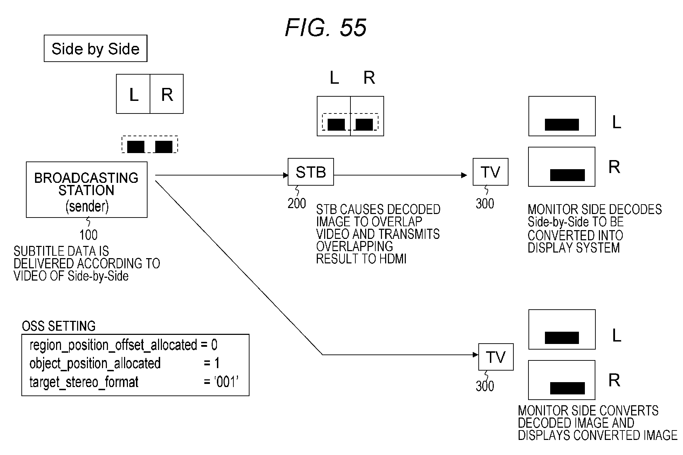

Fig. 55 illustrates an example of updating the region start position "region_horizontal_address" in units of frames. It is assumed that in the frame T0 (initial frame), the region start position "region_horizontal_address(T0)" at the left-eye image (left view) side is "region_horizontal_address + disparity_offset". At the right-eye image (right view) side, "c0" is set as the start position, and bitmap data of the region at the left-eye image (left view) is copied to "c0". In this case, "c0 = region_horizontal_address - disparity_offset" is regarded.

The region start position "region_horizontal_address(T1)" at the left-eye image (left view) side of a frame T1 which is the next frame and the start position "c1" of copied bitmap data at the right-eye image (right view) side are updated as follows. It is assumed that the offset value of the frame T1 is "offset_sequence(T1)". In other words, the region start position "region_horizontal_address1(T1)" at the left-eye image (left view) side is "region_horizontal_address1(T0) + offset_sequence(T1)". Further, the start position "c1" of copied bitmap data at the right-eye image (right view) side is "c0 - offset_sequence(T1)".

The region start position "region_horizontal_address(T2)" at the left-eye image (left view) side of a frame T2 which is the next frame and the start position "c2" of copied bitmap data at the right-eye image (right view) side are updated as follows. It is assumed that the offset value of the frame T2 is "offset_sequence(T2)". In other words, the region start position "region_horizontal_address1(T2)" at the left-eye image (left view) side is "region_horizontal_address1(T1) + offset_sequence(T2)". Further, the start position "c2" of copied bitmap data at the right-eye image (right view) side is "c1 - offset_sequence(T2)". In the following, the region start position of each frame is obtained and updated in units of regions in the same way.

Fig. 55 schematically illustrates OSS setting and the flow of stereoscopic image data and subtitle data from the broadcasting station 100 to the television receiver 300 via the set-top box 200 in the "case E (side-by-side)". In this case, the broadcasting station 100 generates subtitle data for a stereoscopic image according to the side-by-side format. Then, the stereoscopic image data is included in a video data stream and then transmitted, and the subtitle data is included in a subtitle data stream and then transmitted.

The set-top box 200 generates display data for displaying a left-eye subtitle and a right-eye subtitle based on the subtitle data, and causes the display data to overlap the stereoscopic image data. Then, the stereoscopic image data that the display data of the subtitle overlaps is transmitted to the television receiver 300 through a digital interface of the HDMI. In this case, the transmission format of the stereoscopic image data from the set-top box 200 to the television receiver 300 is the side-by-side format.

The television receiver 300 executes a decoding process on the stereoscopic image data transmitted from the set-top box 200. Then, data of a left-eye image and a right-eye image that a subtitle overlaps is generated, and binocular disparity image (the left-eye image and the right-eye image) for causing the user to recognize the stereoscopic image is displayed on a display panel such as a liquid crystal display (LCD). Further, a direct path from the broadcasting station 100 to the television receiver 300 may be used as illustrated in Fig. 55. In this case, for example, the television receiver 300 has the same processing function unit as the set-top box 200.

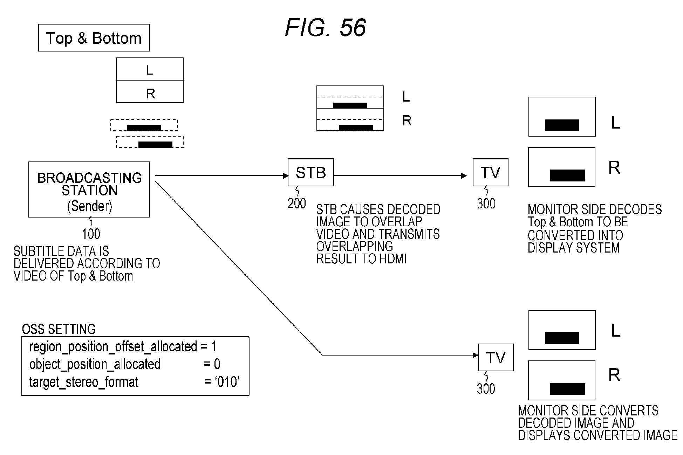

Fig. 56 schematically illustrates OSS setting and the flow of stereoscopic image data and subtitle data from the broadcasting station 100 to the television receiver 300 via the set-top box 200 in the "case E (top-and-bottom)". In this case, the broadcasting station 100 generates subtitle data for a stereoscopic image according to the top-and-bottom format. Then, the broadcasting station 100 includes the stereoscopic image data in a video data stream and then transmits the resultant data, and includes the subtitle data in a subtitle data stream and then transmits the resultant data.

The set-top box 200 generates display data for displaying a left-eye subtitle and a right-eye subtitle based on the subtitle data, and causes the display data to overlap the stereoscopic image data. Then, the stereoscopic image data that the display data of the subtitle overlaps is transmitted to the television receiver 300 through a digital interface of the HDMI. In this case, the transmission format of the stereoscopic image data from the set-top box 200 to the television receiver 300 is the top-and-bottom format.

The television receiver 300 executes a decoding process on the stereoscopic image data transmitted from the set-top box 200. Then, data of a left-eye image and a right-eye image that a subtitle overlaps is generated, and binocular disparity image (the left-eye image and the right-eye image) for causing the user to recognize the stereoscopic image is displayed on a display panel such as an LCD. Further, similarly to the above-described case E (side-by-side), a direct path from the broadcasting station 100 to the television receiver 300 may be used as illustrated in Fig. 56. In this case, for example, the television receiver 300 has the same processing function unit as the set-top box 200.

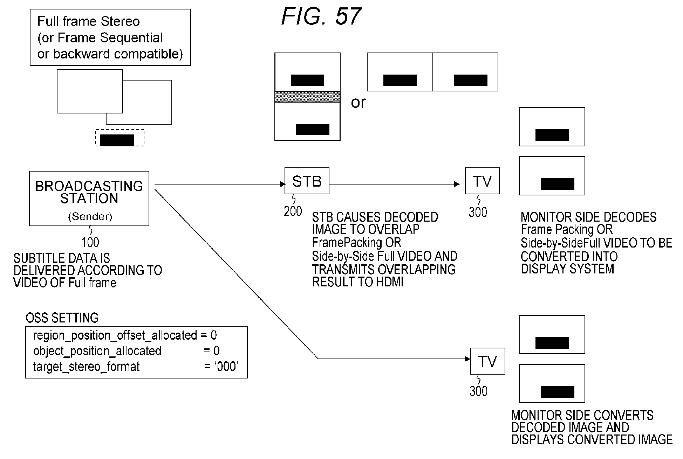

Fig. 57 schematically illustrates OSS setting and the flow of stereoscopic image data and subtitle data from the broadcasting station 100 to the television receiver 300 via the set-top box 200 in the "case E (full frame, frame sequential, or backward compatible)". In this case, the broadcasting station 100 generates subtitle data for a stereoscopic image according to the full frame format or the backward compatible format. Then, the broadcasting station 100 includes the stereoscopic image data in a video data stream and then transmits the resultant data, and includes the subtitle data in a subtitle data stream and then transmits the resultant data.

The set-top box 200 generates display data for displaying a left-eye subtitle and a right-eye subtitle based on the subtitle data, and causes the display data to overlap the stereoscopic image data. Then, the stereoscopic image data that the display data of the subtitle overlaps is transmitted to the television receiver 300 through a digital interface of the HDMI. In this case, the transmission format of the stereoscopic image data from the set-top box 200 to the television receiver 300 is the frame packing format or the side-by-side full video format.

The television receiver 300 executes a decoding process on the stereoscopic image data transmitted from the set-top box 200. Then, data of a left-eye image and a right-eye image that a subtitle overlaps is generated, and binocular disparity image (the left-eye image and the right-eye image) for causing the user to recognize the stereoscopic image is displayed on a display panel such as an LCD. Further, even in this case, similarly to the above-described case E (side-by-side), a direct path from the broadcasting station 100 to the television receiver 300 may be used as illustrated in Fig. 57. In this case, for example, the television receiver 300 has the same processing function unit as the set-top box 200.

In the transmission data generating unit 110 illustrated in Fig. 2, the bit stream data BSD output from the multiplexer 122 is a multiplexed data stream including the video data stream and the subtitle data stream. The video data stream includes the stereoscopic image data. The subtitle data stream includes the subtitle data for the stereoscopic image (for the 3D image) corresponding to the transmission format of the stereoscopic image data.

The subtitle data for the stereoscopic image includes the left-eye subtitle data and the right-eye subtitle data. Thus, the reception side can easily generate display data of the left-eye subtitle to overlap the left-eye image data included in the stereoscopic image data and display data of the right-eye subtitle to overlap the right-eye image data included in the stereoscopic image data based on the subtitle data for the stereoscopic image, and thus processing can be facilitated.

### [Description of Set-Top Box]

Referring back to Fig. 1, the set-top box 200 receives the bit stream data (transport stream) BSD transmitted from the broadcasting station 100 through the broadcast wave. The bit stream data BSD includes the stereoscopic image data including the left-eye image data and the right-eye image data, and the audio data. The bit stream data BSD further includes the subtitle data for the stereoscopic image for displaying the subtitle.

The set-top box 200 includes a bit stream processing unit 201. The bit stream processing unit 201 extracts the stereoscopic image data, the audio data, and the subtitle data from the bit stream data BSD. Then, the bit stream processing unit 201 generates stereoscopic image data that the subtitle overlaps using the stereoscopic image data, the subtitle data, and the like.

In this case, disparity is considered to be brought to occur between the left-eye subtitle to overlap the left-eye image and the right-eye subtitle to overlap the right-eye image. For example, as described above, the subtitle data for the stereoscopic image received from the broadcasting station 100 is generated so that disparity can be brought to occur between the left-eye subtitle and the right-eye subtitle. As described above, by brining disparity to occur between the left-eye subtitle and the right-eye subtitle, the user can recognize the subtitle short of an image.

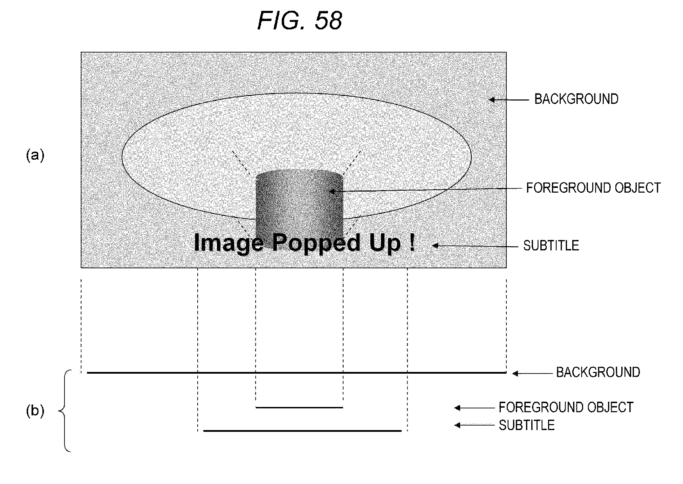

Fig. 58(a) illustrates a display example of a caption unit (subtitle) on an image. In this display example, a subtitle overlaps an image including a background and a foreground object on an image. Fig. 58(b) illustrates a sense of perspective of a background, a foreground object, and a subtitle, and the subtitle is recognized at the very front.

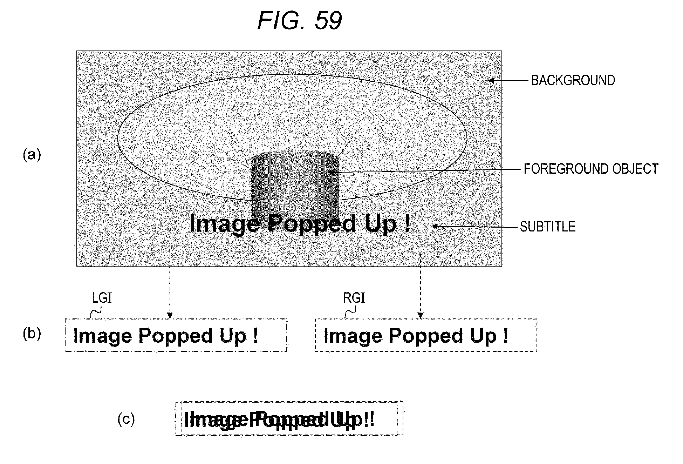

Fig. 59(a) illustrates a display example of a caption unit (subtitle) on an image which is the same to Fig. 58(a). Fig. 59(b) illustrates a left-eye subtitle LGI to overlap a left-eye image and a right-eye subtitle RGI to overlap a right-eye image. Fig. 59(c) illustrates that disparity is brought to occur between the left-eye subtitle LGI and the right-eye subtitle RGI so that the subtitle can be recognized at the very front.

### [Configuration Example of Set-Top Box]

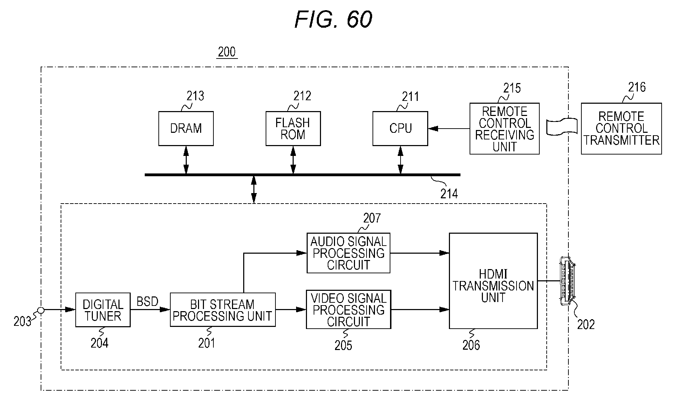

A configuration example of the set-top box 200 will be described. Fig. 60 illustrates a configuration example of the set-top box 200. The set-top box 200 includes the bit stream processing unit 201, the HDMI terminal 202, an antenna terminal 203, a digital tuner 204, a video signal processing circuit 205, an HDMI transmission unit 206, and an audio signal processing circuit 207. The set-top box 200 further includes a CPU 211, a flash ROM 212, a DRAM 213, an internal bus 214, a remote control receiving unit 215, and a remote control transmitter 216.

The antenna terminal 203 is a terminal to which a television broadcast signal received by a receiving antenna (not illustrated) is input. The digital tuner 204 processes the television broadcast signal input to the antenna terminal 203, and then outputs predetermined bit stream data (transport stream) BSD corresponding to a channel selected by the user.

The bit stream processing unit 201 extracts the stereoscopic image data, the audio data, and the subtitle data for the stereoscopic image (including the disparity information group) from the bit stream data BSD as described above. The bit stream processing unit 201 synthesizes the display data of the left-eye subtitle and the right-eye subtitle with the stereoscopic image data, and acquires display stereoscopic image data that the subtitle overlaps. The bit stream processing unit 201 outputs the audio data. The detailed configuration of the bit stream processing unit 201 will be described later.

The video signal processing circuit 205 performs an image quality adjustment process on the display stereoscopic image data acquired by the bit stream processing unit 201 as necessary, and then supplies the processed display stereoscopic image data to the HDMI transmission unit 206. The audio signal processing circuit 207 performs, an acoustic quality adjustment process on the audio data output from the bit stream processing unit 201 as necessary, and then supplies the processed audio data to the HDMI transmission unit 206.

The HDMI transmission unit 206 transmits, for example, image data and audio data which are not compressed through the HDMI terminal 202 by communication that conforms to the HDMI. In this case, since the image data and the audio data are transmitted through a TMDS channel of the HDMI, the image data and the audio data are packed and then output from the HDMI transmission unit 206 to the HDMI terminal 202.

For example, when a transmission format of stereoscopic image data from the broadcasting station 100 is the side-by-side format, the side-by-side format is used as a TMDS transmission format (see Fig. 55). Further, for example, when a transmission format of stereoscopic image data from the broadcasting station 100 is the top-and-bottom format, the top-and-bottom format is used as a TMDS transmission format (see Fig. 56). Further, for example, when a transmission format of stereoscopic image data from the broadcasting station 100 is the full frame format, the frame sequential format, or the backward compatible format, the frame packing format or the side-by-side (full video) format is used as a TMDS transmission format (see Fig. 57).

The CPU 211 controls an operation of each component of the set-top box 200. The flash ROM 212 stores control software and data. The DRAM 213 provides a work area of the CPU 211. The CPU 211 develops software or data read from the flash ROM 212 to the DRAM 213, activates the software, and controls each component of the set-top box 200.

The remote control receiving unit 215 receives a remote control signal (remote control code) transmitted from the remote control transmitter 216, and supplies the remote control signal to the CPU 211. The CPU 211 controls each component of the set-top box 200 based on the remote control code. The CPU 211, the flash ROM 212, and the DRAM 213 are connected to the internal bus 214.

An operation of the set-top box 200 will be briefly described. The television broadcast signal input to the antenna terminal 203 is supplied to the digital tuner 204. The digital tuner 204 processes the television broadcast signal, and outputs predetermined bit stream data (transport stream) BSD corresponding to a channel selected by the user.

The bit stream data BSD output from the digital tuner 204 is supplied to the bit stream processing unit 201. The bit stream processing unit 201 extracts the stereoscopic image data, the audio data, the subtitle data for the stereoscopic image (including the disparity information group), and the like from the bit stream data BSD. The bit stream processing unit 201 synthesizes the display data (bitmap data) of the left-eye subtitle and the right-eye subtitle with the stereoscopic image data, and acquires display stereoscopic image data that the subtitle overlaps.

The display stereoscopic image data acquired by the bit stream processing unit 201 is supplied to the video signal processing circuit 205. The video signal processing circuit 205 performs the image quality adjustment process on the display stereoscopic image data as necessary. The processed display stereoscopic image data output from the video signal processing circuit 205 is supplied to the HDMI transmission unit 206.

The audio data acquired by the bit stream processing unit 201 is supplied to the audio signal processing circuit 207. The audio signal processing circuit 207 performs the acoustic quality adjustment process on the audio data as necessary. The processed audio data output from the audio signal processing circuit 207 is supplied to the HDMI transmission unit 206. Then, the stereoscopic image data and the audio data which are supplied to the HDMI transmission unit 206 are transmitted from the HDMI terminal 202 to the HDMI cable 400 through the TMDS channel of the HDMI.

### [Configuration Example of Bit Stream Processing Unit]

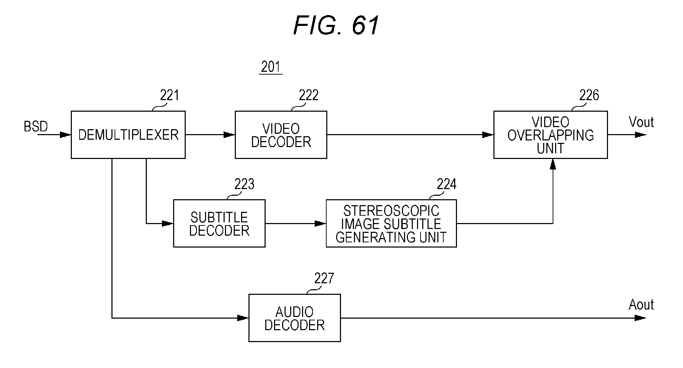

Fig. 61 illustrates a configuration example of the bit stream processing unit 201. The bit stream processing unit 201 has a configuration corresponding to the transmission data generating unit 110 illustrated in Fig. 2. The bit stream processing unit 201 includes a demultiplexer 221, a video decoder 222, a subtitle decoder 223, a stereoscopic image subtitle generating unit 224, a video overlapping unit 226, and an audio decoder 227.

The demultiplexer 221 extracts a video packet, an audio packet, and a subtitle packet from the bit stream data BSD, and transmits the packets to the corresponding decoders, respectively. The demultiplexer 221 extracts information such as the PMT and the EIT included in the bit stream data BSD, and then transmits the extracted information to the CPU 211. As described above, it is possible to identify that Stream_content ('0x03' = DVB subtitles) & Component_type (for 3Dtarget) are described in the component descriptor included in the EIT, and subtitle data for a stereoscopic image is included in the subtitle data stream. Thus, the CPU 211 can identify that the subtitle data for the stereoscopic image is included in the subtitle data stream through the description.

The video decoder 222 performs processing reverse to the video encoder 113 of the transmission data generating unit 110. In other words, the video decoder 222 reconstructs a video data stream from the video packet extracted by the demultiplexer 221, performs a decoding process, and acquires stereoscopic image data including left-eye image data and right-eye image data. Examples of the transmission format of stereoscopic image data includes a first transmission format ("top-and-bottom" format), a second transmission format ("side-by-side" format), and a third transmission format ("full frame" format, "frame sequential" format, or a "backward compatible" format) (see Fig. 4).

The subtitle decoder 223 performs processing reverse to the subtitle encoder 133 of the transmission data generating unit 110. In other words, the subtitle decoder 223 reconstructs a subtitle data stream from the subtitle packet extracted by the demultiplexer 221, performs a decoding process, and obtains subtitle data for a stereoscopic image (including a disparity information group).

The stereoscopic image subtitle generating unit 224 generates display data (bitmap data) of the left-eye subtitle and the right-eye subtitle that overlaps the stereoscopic image data based on the subtitle data for the stereoscopic image. As described above, the subtitle data for the stereoscopic image transmitted from the broadcasting station 100 is generated to bring disparity to occur between the left-eye subtitle and the right-eye subtitle. For this reason, the display data of the left-eye subtitle and the right-eye subtitle generated by the stereoscopic image subtitle generating unit 224 brings disparity to occur between the left-eye subtitle and the right-eye subtitle (see Fig. 13(c)).

Further, the stereoscopic image subtitle generating unit 224 brings predetermined disparity to occur between the left-eye subtitle and the right-eye subtitle based on the disparity information group (offset value "offset_sequence"). As described above, the disparity information group is information of disparity which is brought to occur between the left-eye subtitle and the right-eye subtitle in each frame of a predetermined number of frame periods in which a subtitle is displayed. How to bring disparity to occur based on the disparity information group through the stereoscopic image subtitle generating unit 224 depends on factory default setting, user setting after purchase, or the like.

For example, the stereoscopic image subtitle generating unit 224 sequentially updates disparity between the left-eye subtitle and the right-eye subtitle in units of frames based on the disparity information group (see Fig. 19). Further, for example, the stereoscopic image subtitle generating unit 224 brings disparity, which is based on a representative value of a predetermined number of frame periods such as a maximum value or an average value, to occur between the left-eye subtitle and the right-eye subtitle based the disparity information group (see Fig. 20).

The video overlapping unit 226 causes the display data (bitmap data) of the left-eye subtitle and the right-eye subtitle generated by the stereoscopic image subtitle generating unit 224 to overlap the stereoscopic image data obtained by the video decoder 222, and so obtains display stereoscopic image data Vout. Then, the video overlapping unit 226 outputs the display stereoscopic image data Vout to the outside of the bit stream processing unit 201.

The audio decoder 227 performs processing reverse to the audio encoder 117 of the transmission data generating unit 110. In other words, the audio decoder 227 reconstructs an audio elementary stream from the audio packet extracted by the demultiplexer 221, performs a decoding process, and obtains audio data Aout. Then, the audio decoder 227 outputs the audio data Aout to the outside of the bit stream processing unit 201.

An operation of the bit stream processing unit 201 illustrated in Fig. 61 will be briefly described. The bit stream data BSD output from the digital tuner 204 (see Fig. 60) is supplied to the demultiplexer 221. The demultiplexer 221 extracts a video packet, an audio packet, and a subtitle packet from the bit stream data BSD, and transmits the packets to the corresponding decoders, respectively.

The video decoder 222 reconstructs a video data stream from the video packet extracted by the demultiplexer 221, performs a decoding process, and acquires stereoscopic image data including left-eye image data and right-eye image data. The stereoscopic image data is supplied to the video overlapping unit 226.

The subtitle decoder 223 reconstructs a subtitle data stream from the subtitle packet extracted by the demultiplexer 221, performs a decoding process, and obtains subtitle data for a stereoscopic image (including a disparity information group). The subtitle data is supplied to the stereoscopic image subtitle generating unit 224.

The stereoscopic image subtitle generating unit 224 generates display data (bitmap data) of the left-eye subtitle and the right-eye subtitle that overlaps the stereoscopic image data based on the subtitle data for the stereoscopic image. In this case, since the subtitle data for the stereoscopic image is generated to bring disparity to occur between the left-eye subtitle and the right-eye subtitle, the display data brings disparity to occur between the left-eye subtitle and the right-eye subtitle. The display data is supplied to the video overlapping unit 226.

The video overlapping unit 226 causes the display data of the left-eye subtitle and the right-eye subtitle generated by the stereoscopic image subtitle generating unit 224 to overlap the stereoscopic image data obtained by the video decoder 222, and obtains display stereoscopic image data Vout. The display stereoscopic image data Vout is output to the outside of the bit stream processing unit 201.

The audio decoder 227 reconstructs an audio elementary stream from the audio packet extracted by the demultiplexer 221, performs a decoding process, and obtains audio data Aout corresponding to the display stereoscopic image data Vout. The audio data Aout is output to the outside of the bit stream processing unit 201.

In the set-top box 200 illustrated in Fig. 60, the bit stream data BSD output from the digital tuner 204 is a multiplexed data stream including a video data stream and a subtitle data stream. The video data stream includes the stereoscopic image data. The subtitle data stream includes the subtitle data for the stereoscopic image (for the 3D image) corresponding to the transmission format of the stereoscopic image data.

The subtitle data for the stereoscopic image includes the left-eye subtitle data and the right-eye subtitle data. Thus, the stereoscopic image subtitle generating unit 224 of the bit stream processing unit 59 can easily generate display data of the left-eye subtitle to overlap the left-eye image data included in the stereoscopic image data and display data of the right-eye subtitle to overlap the right-eye image data included in the stereoscopic image data based on the subtitle data for the stereoscopic image, and thus processing can be facilitated.

Further, in the set-top box 200 illustrated in Fig. 60, the subtitle data obtained by the subtitle decoder 223 of the bit stream processing unit 201 includes the disparity information group (offset value "offset_sequence"). Thus, the stereoscopic image subtitle generating unit 224 can bring predetermined disparity to occur between the left-eye subtitle and the right-eye subtitle based on the disparity information group. For example, disparity sequentially updated in units of frames can be brought to occur between the left-eye subtitle and the right-eye subtitle. Further, for example, disparity based on a representative value of a predetermined number of frame periods such as a maximum value thereof or an average value thereof can be brought to occur between the left-eye subtitle and the right-eye subtitle.

### [Description of Television Receiver]

Referring back to Fig. 1, the television receiver 300 receives the stereoscopic image data transmitted from the set-top box 200 through the HDMI cable 400. The television receiver 300 includes a 3D signal processing unit 301. The 3D signal processing unit 301 performs a process (a decoding process) corresponding to a transmission format on the stereoscopic image data, and so generates the left-eye image data and the right-eye image data.

### [Configuration Example of Television Receiver]

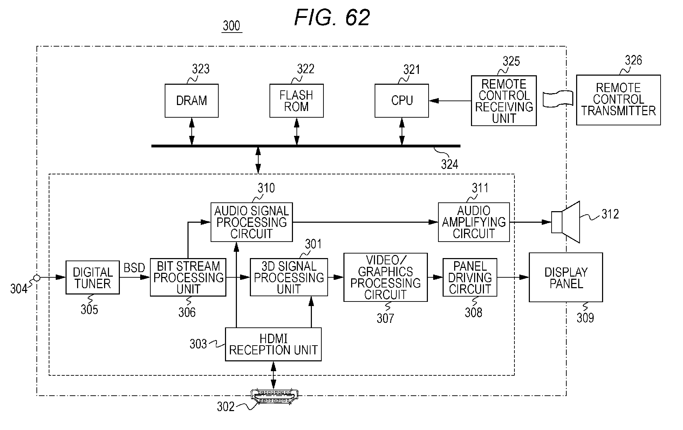

A configuration example of the television receiver 300 will be described. Fig. 62 illustrates a configuration example of the television receiver 300. The television receiver 300 includes the 3D signal processing unit 301, the HDMI terminal 302, an HDMI reception unit 303, an antenna terminal 304, a digital tuner 305, and a bit stream processing unit 306.

The television receiver 300 further includes a video/graphics processing circuit 307, a panel driving circuit 308, a display panel 309, an audio signal processing circuit 310, an audio amplifying circuit 311, and a speaker 312. The television receiver 300 further includes a CPU 321, a flash ROM 322, a DRAM 323, an internal bus 324, a remote control receiving unit 325, and a remote control transmitter 326.

The antenna terminal 304 is a terminal to which a television broadcast signal received by a receiving antenna (not illustrated) is input. The digital tuner 305 processes the television broadcast signal input to the antenna terminal 304, and then outputs predetermined bit stream data (transport stream) BSD corresponding to a channel selected by the user.

The bit stream processing unit 306 has the same configuration as the bit stream processing unit 201 of the set-top box 200 illustrated in Fig. 60. The bit stream processing unit 306 extracts stereoscopic image data, audio data, subtitle data of a caption unit, a disparity vector, and the like from the bit stream data BSD. The bit stream processing unit 306 synthesizes left-eye subtitle data and right-eye subtitle data with the stereoscopic image data, and generates and outputs display stereoscopic image data. The bit stream processing unit 306 outputs the audio data.

The HDMI reception unit 303 receives image data and audio data, which are not compressed, supplied to the HDMI terminal 302 through the HDMI cable 400 by communication that conforms to the HDMI. The HDMI reception unit 303 supports, for example, an HDMI1.4a version and can deal with the stereoscopic image data.

The 3D signal processing unit 301 performs a decoding process on the stereoscopic image data which is received by the HDMI reception unit 303 or obtained by the bit stream processing unit 306, and generates left-eye image data and right-eye image data. In this case, the 3D signal processing unit 301 performs the decoding process corresponding to the transmission format thereof (see Fig. 4) on the stereoscopic image data obtained by the bit stream processing unit 306. Further, the 3D signal processing unit 301 performs the decoding process corresponding to the TMDS transmission data format on the stereoscopic image data received by the HDMI reception unit 303.

The video/graphics processing circuit 307 generates image data for displaying a stereoscopic image based on the left-eye image data and the right-eye image data generated by the 3D signal processing unit 301. Further, the video/graphics processing circuit 307 performs an image quality adjustment process on the image data as necessary. Further, the video/graphics processing circuit 307 synthesizes the image data with data of overlapping information such as a menu or a program table as necessary. The panel driving circuit 308 drives the display panel 309 based on the image data output from the video/graphics processing circuit 307. For example, the display panel 309 is configured with an LCD (Liquid Crystal Display), a PDP (Plasma Display Panel), or the like.

The audio signal processing circuit 310 performs a necessary process such as digital to analog (D/A) conversion on the audio data which is received by the HDMI reception unit 303 or obtained by the bit stream processing unit 306. The audio amplifying circuit 311 amplifies an audio signal output from the audio signal processing circuit 310 and supplies the amplified audio signal to the speaker 312.

The CPU 321 controls an operation of each component of television receiver 300. The flash ROM 322 stores control software and data. The DRAM 323 provides a work area of the CPU 321. The CPU 321 develops software and data read from the flash ROM 322 to the DRAM 323, activates the software, and controls each component of the television receiver 300.

The remote control receiving unit 325 receives a remote control signal (remote control code) transmitted from the remote control transmitter 326, and supplies the remote control signal to the CPU 321. The CPU 321 controls each component of the television receiver 300 based on the remote control code. The CPU 321, the flash ROM 322, and the DRAM 323 are connected to the internal bus 324.

An operation of the television receiver 300 illustrated in Fig. 62 will be briefly described. The HDMI reception unit 303 receives the stereoscopic image data and the audio data which are transmitted from the set-top box 200 connected to the HDMI terminal 302 through the HDMI cable 400. The stereoscopic image data received by the HDMI reception unit 303 is supplied to the 3D signal processing unit 301. The audio data received by the HDMI reception unit 303 is supplied to the audio signal processing circuit 310.

The television broadcast signal input to the antenna terminal 304 is supplied to the digital tuner 305. The digital tuner 305 processes the television broadcast signal, and outputs predetermined bit stream data (transport stream) BSD corresponding to a channel selected by the user.

The bit stream data BSD output from the digital tuner 305 is supplied to the bit stream processing unit 306. The bit stream processing unit 306 extracts stereoscopic image data, audio data, subtitle data of a caption unit, a disparity vector, and the like from the bit stream data BSD. The bit stream processing unit 306 synthesizes left-eye subtitle data and right-eye subtitle data with the stereoscopic image data, and generates display stereoscopic image data.

The display stereoscopic image data generated by the bit stream processing unit 306 is supplied to the 3D signal processing unit 301. The audio data obtained by the bit stream processing unit 306 is supplied to the audio signal processing circuit 310.

The 3D signal processing unit 301 performs a decoding process on the stereoscopic image data which is received by the HDMI reception unit 303 or obtained by the bit stream processing unit 306, and generates left-eye image data and right-eye image data. The left-eye image data and the right-eye image data are supplied to the video/graphics processing circuit 307. The video/graphics processing circuit 307 generates image data for displaying a stereoscopic image based on the left-eye image data and the right-eye image data, and performs an image quality adjustment process and a synthesis process of the overlapping information data as necessary.

The image data obtained by the video/graphics processing circuit 307 is supplied to the panel driving circuit 308. Thus, the stereoscopic image is displayed through the display panel 309. For example, the left-eye image based on left-eye image data and the right-eye image based on the right-eye image data are alternately displayed on the display panel 309 in a time division manner. For example, a viewer can perceive a stereoscopic image by wearing shutter glasses in which a left-eye shutter and a right-eye shutter are alternately opened in synchronization with a display of the display panel 309 and then viewing only the left-eye image with the left eye and only the right-eye image with the right eye.

The audio signal processing circuit 310 performs a necessary process such as D/A conversion on the audio data which is received by the HDMI reception unit 303 or obtained by the bit stream processing unit 306. The audio data is amplified by the audio amplifying circuit 311 and then supplied to the speaker 312. Thus, a sound corresponding to a display image of the display panel 309 is output from the speaker 312.

As described above, in the image transceiving system 10 illustrated in Fig. 1, the multiplexed data stream including the video data stream and the subtitle data stream is transmitted from the broadcasting station 100 (the transmission data generating unit 201) to the set-top box 200. The video data stream includes the stereoscopic image data. The subtitle data stream includes the subtitle data for the stereoscopic image (for the 3D image) corresponding to the transmission format of the stereoscopic image data.

The subtitle data for the stereoscopic image includes the left-eye subtitle data and the right-eye subtitle data. Thus, the set-top box 200 can easily generate display data of the left-eye subtitle to overlap the left-eye image data included in the stereoscopic image data and display data of the right-eye subtitle to overlap the right-eye image data included in the stereoscopic image data based on the subtitle data for the stereoscopic image, and thus processing of the bit data processing unit 201 can be facilitated.

Further, in the image transceiving system 10 illustrated in Fig. 1, the subtitle data for the stereoscopic image transmitted from the broadcasting station 100 (the transmission data generating unit 201) to the set-top box 200 is generated to bring disparity to occur between the left-eye subtitle and the right-eye subtitle. For this reason, in the set-top box 200, the display data of the left-eye subtitle and the right-eye subtitle generated by the stereoscopic image subtitle generating unit 224 automatically brings disparity to occur between the left-eye subtitle and the right-eye subtitle. Thus, in the set-top box 200, even though a special process of brining disparity to occur between the left-eye subtitle and the right-eye subtitle is not performed, the consistency of a sense of perspective with each object in an image when a subtitle is displayed can be maintained to an optimal state.

Further, in the image transceiving system 10 illustrated in Fig. 1, the subtitle data for the stereoscopic image transmitted from the broadcasting station 100 (the transmission data generating unit 201) to the set-top box 200 includes the disparity information group (offset value "offset_sequence"). Thus, in the set-top box 200, predetermined disparity can be brought to occur between the left-eye subtitle and the right-eye subtitle based on the disparity information group. For example, disparity sequentially updated in units of frames can be brought to occur between the left-eye subtitle and the right-eye subtitle. Further, for example, disparity based on a representative value of a predetermined number of frame periods such as a maximum value thereof or an average value thereof can be brought to occur between the left-eye subtitle and the right-eye subtitle.

### <2. Modified Examples>

In the above embodiment, the image transceiving system 10 is configured to include the broadcasting station 100, the set-top box 200, and the television receiver 300. Meanwhile, the television receiver 300 includes the bit stream processing unit 306 that performs the same function as the bit stream processing unit 201 of the set-top box 200 as illustrated in Fig. 62. Thus, an image transceiving system 10A may be configured with the broadcasting station 100 and the television receiver 300 as illustrated in Fig. 63.

Further, the above embodiment has been described in connection with the example in which the data stream (bit stream data) including the stereoscopic image data is broadcasted from the broadcasting station 100. However, the invention can be similarly applied even to a system having a configuration in which the data stream is delivered to a reception terminal via a network such as the Internet.

Further, the above embodiment has been described in connection with the example in which the set-top box 200 is connected with the television receiver 300 through the digital interface of the HDMI. However, the invention can be similarly applied even when the set-top box 200 is connected with the television receiver 300 via a digital interface (including a wireless interface as well as a wired interface) that performs the same function as the digital interface of the HDMI.

Furthermore, the above embodiment has been described in connection with the example in which the subtitle is dealt as the overlapping information. However, the invention can be similarly applied even when overlapping information such as graphics information or text information is dealt.

### INDUSTRIAL APPLICABILITY

The invention can be applied to a stereoscopic image system that can display overlapping information such as a subtitle to overlap an image.

### REFERENCE SIGNS LIST

- 10, 10A: Image transceiving system
- 100: Broadcasting station
- 110: Transmission data generating unit
- 113: Video encoder
- 117: Audio encoder
- 122: Multiplexer
- 130: Data fetching unit
- 130a: Data recording medium
- 131: Disparity information generating unit
- 132: Subtitle generating unit
- 133: Subtitle processing unit
- 134: Subtitle encoder
- 200: Set-top box (STB)
- 201: Bit stream processing unit
- 202: HDMI terminal
- 203: Antenna terminal
- 204: Digital tuner
- 205: Video signal processing circuit
- 206: HDMI transmission unit
- 207: Audio signal processing circuit
- 211: CPU
- 215: Remote control receiving unit
- 216: Remote control transmitter
- 221: Demultiplexer
- 222: Video decoder
- 223: Subtitle decoder
- 224: Stereoscopic image subtitle generating unit
- 226: Video overlapping unit
- 227: Audio decoder
- 300: Television receiver (TV)
- 301: 3D signal processing unit
- 302: HDMI terminal
- 303: HDMI reception unit
- 304: Antenna terminal
- 305: Digital tuner
- 306: Bit stream processing unit
- 307: Video/graphics processing circuit
- 308: Panel driving circuit
- 309: Display panel
- 310: Audio signal processing circuit
- 311: Audio amplifying circuit
- 312: Speaker
- 321: CPU
- 325: Remote control receiving unit
- 326: Remote control transmitter
- 400: HDMI cable

## Claims

1. A stereoscopic image data transmission device, comprising:
an image data output unit that outputs a stereoscopic image of a predetermined transmission format including left-eye image data and right-eye image data;
an overlapping information data output unit that outputs data of overlapping information to overlap an image by the left-eye image data and the right-eye image data;
an overlapping information data processing unit that converts the data of the overlapping information output from the overlapping information data output unit into transmission overlapping information data including data of left-eye overlapping information corresponding to the left-eye image data included in the stereoscopic image data of the predetermined transmission format and data of right-eye overlapping information corresponding to the right-eye image data; and
a data transmission unit that transmits multiplexed data stream that includes a first data stream including the stereoscopic image data output from the stereoscopic image data output unit and a second data stream including the transmission overlapping information data output from the overlapping information data processing unit.

2. The stereoscopic image data transmission device according to claim 1, further comprising
a disparity information output unit that outputs disparity information between a left-eye image by the left-eye image data and a right-eye image by the right-eye image data,
wherein the overlapping information data processing unit brings disparity to occur between the left-eye overlapping information and the right-eye overlapping information by shifting at the least left-eye overlapping information or the right-eye overlapping information based on the disparity information output from the disparity information output unit.

3. The stereoscopic image data transmission device according to claim 2, further comprising
a disparity information generating unit that generates information of disparity which is brought to occur between the left-eye overlapping information and the right-eye overlapping information in each frame of a predetermined number of frame periods in which the overlapping information is displayed based on the disparity information output from the disparity information output unit,
wherein the data transmission unit distinguish the information of the disparity, in each frame of the predetermined number of frame periods, generated by the disparity information generating unit from the data of the transmission overlapping information using identification information, includes the information of the disparity in the second data stream, and transmits the second data stream including the information of the disparity.

4. The stereoscopic image data transmission device according to claim 3,
wherein the information of the disparity in each frame of the predetermined number of frame periods generated by the disparity information generating unit is offset information on information of disparity of a previous frame.

5. The stereoscopic image data transmission device according to claim 1,
wherein the data transmission unit inserts identification information identifying that the transmission overlapping information data corresponding to a transmission format of the stereoscopic image data is included in the second data stream into the multiplexed data stream.

6. The stereoscopic image data transmission device according to claim 1,
wherein the data of the overlapping information is subtitle data, and
the overlapping information data processing unit generates the data of the left-eye overlapping information and the data of the right-eye overlapping information as data of different objects of the same region or data of the same object of the same region.

7. The stereoscopic image data transmission device according to claim 1,
wherein the data of the overlapping information is subtitle data, and
the overlapping information data processing unit generates the data of the left-eye overlapping information and the data of the right-eye overlapping information as data of different regions of the same page.

8. The stereoscopic image data transmission device according to claim 1,
wherein the data of the overlapping information is subtitle data, and
the overlapping information data processing unit generates the data of the left-eye overlapping information and the data of the right-eye overlapping information as data of regions of different pages.

9. The stereoscopic image data transmission device according to claim 1,
wherein the data of the overlapping information is subtitle data, and
the overlapping information data processing unit generates one of the data of the left-eye overlapping information and the data of the right-eye overlapping information as data of a region of a predetermined page and the other as data of a copied region copied from the region of the predetermined page.

10. The stereoscopic image data transmission device according to claim 1,
wherein the data of the overlapping information is subtitle data, and
the overlapping information data processing unit generates one of the data of the left-eye overlapping information and the data of the right-eye overlapping information as data of a region of a predetermined page and generates disparity information under the assumption that the other is synthesized by a receiver side.

11. The stereoscopic image data transmission device according to claim 1,
wherein the data of the overlapping information is subtitle data, and
the overlapping information data processing unit generates the data of the left-eye overlapping information and the data of the right-eye overlapping information as data of different objects of the same region when a transmission format of the stereoscopic image data is a side-by-side format.

12. The stereoscopic image data transmission device according to claim 1,
wherein the data of the overlapping information is subtitle data, and
the overlapping information data processing unit generates the data of the left-eye overlapping information and the data of the right-eye overlapping information as data of different regions of the same page when a transmission format of the stereoscopic image data is a top-and-bottom format.

13. A method of transmitting stereoscopic image data, comprising:
outputting a stereoscopic image data of a predetermined transmission format including left-eye image data and right-eye image data;
outputting data of overlapping information to overlap an image by the left-eye image data and the right-eye image data;
converting the data of the overlapping information output in the outputting of data of overlapping information into transmission overlapping information data including data of left-eye overlapping information corresponding to the left-eye image data included in the stereoscopic image data of the predetermined transmission format and data of right-eye overlapping information corresponding to the right-eye image data; and
transmitting multiplexed data stream that includes a first data stream including the stereoscopic image data output in the outputting of a stereoscopic image data and a second data stream including the transmission overlapping information data output in the outputting of data of overlapping information.

14. A stereoscopic image data reception device, comprising:
a data reception unit that receives a multiplexed data stream including a first data stream and a second data stream,
the first data stream including stereoscopic image data of a predetermined transmission format that includes left-eye image data and right-eye image data, and
the second data stream including transmission overlapping information data that includes data of left-eye overlapping information corresponding to the left-eye image data included in the stereoscopic image data of the predetermined transmission format and data of right-eye overlapping information corresponding to the right-eye image data,
an image data acquiring unit that acquires the stereoscopic image data from the first data stream included in the multiplexed data stream received by the data reception unit;
an overlapping information data acquiring unit that acquires the transmission overlapping information data from the second data stream included in the multiplexed data stream received by the data reception unit;
a display data generating unit that generates display data for displaying overlapping information on a left-eye image and a right-eye image in an overlapping manner based on the transmission overlapping information data acquired by the overlapping information data acquiring unit; and
a data synthesizing unit that obtains output stereoscopic image data by overlapping the display data generated by the display data generating unit on the stereoscopic image data acquired by the image data acquiring unit.

15. The stereoscopic image data reception device according to claim 14,
wherein the second data stream included in the multiplexed data stream received by the data reception unit further includes information of disparity which is brought to occur between the left-eye overlapping information and the right-eye overlapping information in each frame of a predetermined number of frame periods in which the overlapping information is displayed,
the stereoscopic image data reception device further comprises a disparity information acquiring unit that acquires information of disparity in each frame of a predetermined number of frame periods from the second data stream included in the multiplexed data stream received by the data reception unit, and
the display data generating unit brings predetermined disparity to occur between the left-eye overlapping information and the right-eye overlapping information based on the information of the disparity, in each frame of the predetermined number of frame periods, acquired by the disparity information acquiring unit.

16. The stereoscopic image data reception device according to claim 15,
wherein the display data generating unit obtains a representative value of the information of the disparity in each frame of the predetermined number of frame periods, and brings disparity to occur between the left-eye overlapping information and the right-eye overlapping information using the predetermined number of frame periods and the representative value.

17. The stereoscopic image data reception device according to claim 15,
wherein the display data generating unit sequentially update disparity between the left-eye overlapping information and the right-eye overlapping information in the predetermined number of frame periods using the information of the disparity in each frame of the predetermined number of frame periods.

18. The stereoscopic image data reception device according to claim 14, further comprising:
a digital interface unit that transmits the output stereoscopic image data acquired by the data synthesizing unit to an external device.

19. The stereoscopic image data reception device according to claim 14,
wherein the multiplexed data stream received by the data reception unit includes identification information identifying the transmission overlapping information data corresponding to a transmission format of the stereoscopic image data is included in the second data stream,
the stereoscopic image data reception device further comprises an identification information acquiring unit that acquires the identification information from the multiplexed data stream received by the data reception unit, and
an overlapping information data identifying unit that identifies that the transmission overlapping information data corresponding to the transmission format of the stereoscopic image data is included in the second data stream based on the identification information acquired by the identification information acquiring unit.

20. A method of receiving stereoscopic image data, comprising:
receiving a multiplexed data stream including a first data stream and a second data stream,
the first data stream including stereoscopic image data of a predetermined transmission format that includes left-eye image data and right-eye image data, and
the second data stream including transmission overlapping information data that includes data of left-eye overlapping information corresponding to the left-eye image data included in the stereoscopic image data of the predetermined transmission format and data of right-eye overlapping information corresponding to the right-eye image data,
acquiring the stereoscopic image data from the first data stream included in the multiplexed data stream received in the receiving of a multiplexed data stream;
acquiring the transmission overlapping information data from the second data stream included in the multiplexed data stream received in the receiving of a multiplexed data stream;
generating display data for displaying overlapping information on a left-eye image and a right-eye image in an overlapping manner based on the transmission overlapping information data acquired in the acquiring of the transmission overlapping information data; and
obtaining output stereoscopic image data by causing the display data generated in the generating of display data to overlap the stereoscopic image data acquired in the acquiring of the stereoscopic image data.
